## Europäisches Patentamt

(19) **European Patent Office**

**Office européen des brevets**

(11) Veröffentlichungsnummer: **0 015 907**
**B1**

(12) # EUROPÄISCHE PATENTSCHRIFT

(45) Veröffentlichungstag der Patentschrift:
10.03.82

(51) Int. Cl.³: **B 60 K 41/04**

(21) Anmeldenummer: **79900151.6**

(22) Anmeldetag: **07.12.78**

(86) Internationale Anmeldenummer:
**PCT/SE 78/00026**

(87) Internationale Veröffentlichungsnummer:
**WO 79/00781 (18.10.79 Gazette 79/21)**

(54) **VORRICHTUNG ZUR REGELUNG EINER ANTRIEBSMOTOR-GETRIEBE-EINHEIT EINES KRAFTFAHRZEUGES.**

(30) Priorität: **17.03.78 DE 2811574**

(43) Veröffentlichungstag der Anmeldung:
**01.10.80 Patentblatt 80/20**

(45) Bekanntmachung des Hinweises auf die Patenterteilung:
**10.03.82 Patentblatt 82/10**

(84) Benannte Vertragsstaaten:
**DE FR GB SE**

(56) Entgegenhaltungen:
**EP-A1-0 000 960**
**DE-A-2 108 987**
**DE-A1-2 712 327**
**DE-A1-2 720 950**
**GB-A-1 258 591**
**US-A-3 324 740**

(73) Patentinhaber: **ROBERT BOSCH GMBH, Postfach 50, D-7000 Stuttgart 1 (DE)**

(72) Erfinder: **SCHNEIDER, Erich, Entengasse 14, D-7125 Kirchheim (DE)**
Erfinder: **FLEISCHER, Helmut, Augasse 20, D-6161 Niddatal-Ilbenstadt (DE)**
Erfinder: **REMBOLD, Helmut, Öhringerstrasse 27, D-7000 Stuttgart 40 (DE)**
Erfinder: **WITTE, Alexander, Gartenstrasse 91, D-7016 Gerlingen (DE)**

## Vorrichtung zur Regelung einer Antriebsmotor-Getriebe-Einheit eines Kraftfahrzeuges

Die Erfindung geht aus von einer Vorrichtung nach der Gattung des Hauptanspruchs, wie sie beispielsweise in der DE-OS 2 712 321 beschrieben ist.

Zur Erzielung bestimmter Betriebsverhalten von Antriebsmotor-Getriebe-Einheiten, insbesondere Kombinationen von Dieselmotoren und stufenlosen hydrostatischen Getrieben bei schweren Nutzfahrzeugen, ist es bekannt, eine gleichzeitige Regelung von Antriebsmotor und stufenlosem Getriebe vorzunehmen.

So ist aus der GB-A-1 258 591 eine Regeleinrichtung für ein durch eine Brennkraftmaschine angetriebenes verstellbares hydrostatisches Getriebe bekannt, bei der als Steuergerät ein dreiräumlich gekrümmte Steuerflächen aufweisender, dreidimensionaler Nocken dient, dessen drei Steuerflächen durch je einen Fühler abgetastet werden. Durch die Fühler werden über zugeordnete Stelleinrichtungen die Brennstoffzufuhr zu der Brennkraftmaschine sowie das Hubvolumen einer hydrostatischen Pumpe und eines hydrostatischen Motors gesteuert. Der Nocken ist axial und in Drehrichtung verstellbar, und zwar mit Hilfe eines Einstellhebels, der eine der Nockenbewegungen bewirkt, während eine von dem Hochdruck in dem hydrostatischen Getriebe gesteuerte Stelleinrichtung die andere Nockenbewegung ausführt. Die Regelung erfolgt somit auf mechanischem und nicht auf elektronischem Wege, wobei es schwierig und aufwenig ist, die Steuerflächen des dreidimensionalen Nockens so exakt herzustellen, daß die an den Regelvorgang zu stellenden Genauigkeitsanforderungen erfüllt werden können. Außerdem führt das dauernde Abtasten der Steuerflächen zu einer schnellen Abnutzung des Nockens.

Aus der US-A-3 324 740 ist weiterhin eine Steuereinrichtung bekannt, bei der der Fahrer über das Fahrpedal einerseits das Übersetzungsverhältnis des Getriebes und andererseits die Drehzahl des Antriebsmotors einstellt. Durch ein erstes Steuergerät wird die gewünschte Drehzahl durch Endverstellung der Drosselklappe aufrechterhalten, während durch ein zweites Steuergerät das Übersetzungsverhältnis des Getriebes eingestellt wird. Um bei gegebenem Übersetzungsverhältnis ein Abwürgen des Antriebsmotors bei Überlastung der Abtriebswelle zu verhindern, ist ein zusätzliches Steuergerät für das Übersetzungsverhältnis des Getriebes vorgesehen. Dieses zusätzliche Steuergerät verstellt auch im Fall einer unzulässigen Erhöhung der Motordrehzahl das Übersetzungsverhältnis des Getriebes. Dabei wird das zusätzliche Steuergerät aber nur dann wirksam, wenn die gewünschte Motordrehzahl nicht über das entsprechende Stellglied aufrechterhalten werden kann. Bei normalem Betrieb stellt dagegen der Fahrer das Übersetzungsverhältnis des Getriebes und die Motordrehzahl selbst ein, wobei die Motordrehzahl über die Kraftstoffzufuhr in herkömmlicher Weise über den Vergaser gesteuert wird.

Aus der DE-A-2 340 841 ist ein Vorrichtung zum gemeinsamen Steuern eines Antriebsmotors und eines stufenlosen hydrostatischen Getriebes bekannt, bei der der Antriebsmotor und das hydrostatische Getriebe in Abhängigkeit von einem vom Fahrpedal vorgegebenen Drehmoment-Sollwert und dem aus dem Schluckvolumen und dem Betriebsdruck ermittelten Drehmoment-Istwert geregelt werden. Dabei wird von einem Drehzahlgeber die Motordrehzahl erfaßt und das entsprechende Signal dient zur Nullpunktverschiebung bei der Zuführung des Drehmoment-Istwert-Signals zu einer die Stellgröße für die Schrägscheiben des hydrostatischen Getriebes erzeugenden Regelstufe.

Nachteil der beiden letztgenannten Vorrichtungen ist, daß die Betriebsdaten des Antriebsmotors zur Erzielung eines minimalen Kraftstoffverbrauchs nicht oder nur näherungsweise erfaßt werden und damit eine verbrauchsoptimale Betriebsweise des Kraftfahrzeuges mit entsprechend geringer Schadstoffemission nicht gewährleistet ist.

Weiterhin ist aus der DE-AS 2 712 327 ein Verfahren zur selbsttätigen Regelung von Kraftfahrzeugen bekannt, bei dem in Abhängigkeit von der Fahrpedalstellung die Drosselklappe eines Vergasers des Antriebsmotors über einen ersten Kennlinienspeicher geregelt wird. Über einen zweiten Kennlinienspeicher wird aus der Fahrpedalstellung ein Motordrehzahl-Sollwert ermittelt, dieser wird mit dem Motordrehzahl-Istwert verglichen und die Differenz einem Servomechanismus zur Verstellung des stufenlosen Getriebes zugeführt. Nachteil dieses Verfahrens ist, daß die Regelung der Drosselklappe der Regelung des Getriebes überlagert ist, d. h., daß die Stellgröße für das Getriebe der sich aufgrund der Änderung der Dorsselklappenstellung einstellenden Motordrehzahl folgt. Da aber die Drosselklappenregelung wesentlich schneller arbeitet als die Getrieberegelung, ergibt sich eine Hysterese zwischen Getrieberegelung und Motorregelung; der Antriebsmotor kann mithin zwangsläufig nicht auf der Kennlinie minimalen Kraftstoffverbrauches betrieben werden.

Schließlich ist aus der DE-B-2 328 112 noch eine Regeleinrichtung für die Brennstoffzufuhr und für das Übersetzungsverhältnis eines Antriebes für Kraftfahrzeuge bekannt, bei der vom Fahrpedal ein Motordrehzahl-Sollwert vorgegeben wird, der mit dem Motordrehzahl-Istwert verglichen wird, wobe die Differenz dieser Werte zur Steuerung von das Übersetzungsverhältnis des stufenlosen Getriebes verändernden Magnetventilen dient. Gleichzeitig wird ein die Drosselklappe einstellendes Magnetventil von der genannten Differenz der Motordrehzahl-Signale und vom Motordrehzahl-Istwert über eine Kennlinie gesteuert. Auch diese Vorrichtung hat jedoch den Nachteil, daß sie die optimalen Betriebsbedingungen des Kraftfahrzeugs für minimalen Kraftstoffverbrauch nur unvollkommen erfaßt.

Gemeinsamer Nachteil der bekannten Vorrichtung ist schließlich, daß sie nur einen näherungsweise verbrauchsgünstigen Betrieb bewirken und keine Möglichkeit besteht, bei Bedarf die volle Leistung des Kraftfahrzeugs einzustellen. Da jedoch eine verbrauchsoptimale Regelung einer Antriebsmotor-Getriebe-Einheit zwangsläufig eine Verminderung der möglichen Geschwindigkeit für eine Leistungsänderung mit sich bringt, kann dies in solchen Situationen zu Gefahren führen, in denen der Kraftfahrer, beispielsweise beim Überholen, auf eine schnelle Bereitstellung einer hohen Antriebsleistung des Antriebsmotors angewiesen ist.

Es ist weiter in der DE-A-2 108 987 eine Getriebesteuerung für Stufenwechselgetriebe in Kraftfahrzeugen bekanntgeworden, bei der in einem Steuergerät aus dem Betriebszustand des Antriebsmotors und des Fahrzeugs charakterisierenden Meßgrößen nach vorgegebenen Kriterien Schaltsignale zum Gangwechsel des Getriebes erzeugt werden. Das Steuergerät umfaßt dabei eine Kennliniennachbildung, in der aus den Meßgrößen Kenngrößen gebildet werden, und es werden die Schaltsignale dann erzeugt, wenn diese Kenngrößen einen einem optimalen Arbeitsbereich der Antriebsmaschine entsprechenden Bereich überschreiten.

Vorteile der Erfindung

Die erfindungsgemäße Vorrichtung mit den Merkmalen des Hauptanspruchs hat demgegenüber den Vorteil, die Regelung von Antriebsmotor und Getriebe über jeweils abgestimmte Kennlinienfelder bzw. Kennlinien vorzunehmen, wobei der Regelkreis für die Getriebeübersetzung Priorität vor dem Regelkreis für die Einstellung des Antriebsmotors hat. Da der Regelkreis für den Antriebsmotor sehr viel schneller ist als der für das Getriebe, kann die gesamte Antriebsmotor-Getriebe-Einheit auf der verbrauchsoptimalen Kennlinie des Antriebsmotors betrieben werden.

Durch die in den Unteransprüchen aufgeführten Maßnahmen sind vorteilhafte Weiterbildungen der im Hauptanspruch angegebenen Vorrichtung möglich.

Durch die Fahrpedalstellung wird der Leistungs-Sollwert des Antriebsmotors vorgegeben. Hierbei wird das der Fahrpedalstellung entsprechende Signal über eine parabelartige Kennlinie geleitet, deren Form sich aus der Fahrwiderstandsparabel des Kraftfahrzeugs ergibt. Hierdurch wird erreicht, daß sich bei kleinen Leistungen nur ein relativ geringer Leistungszuwachs über dem Pedalweg ergibt, um eine gute Fahrbarkeit bei kleinen Geschwindigkeiten (kleinen Leistungen) zu gewährleisten.

Die erfindungsgemäße Vorrichtung ist so ausgelegt, daß sie sowohl für Antriebe mit stufenlosem Getriebe wie auch für Antriebe mit Stufengetriebe verwendbar ist. Durch das jeweilige Kennfeld wird in Abhängigkeit vom vorgegebenen Leistungs-Sollwert und der gerade vorliegenden Getriebeausgangsdrehzahl, entsprechend der Fahrzeuggeschwindigkeit, entweder das Übersetzungsverhältnis eines stufenlosen Getriebes oder der einzulegende Gang eines Stufengetriebes bestimmt.

Zur Steuerung des Antriebsmotors dient ein Motorkennlinienspeicher, der entweder das Leistungskennfeld des Motors in Abhängigkeit von Motordrehzahl und Drosselklappenstellung oder die Kennlinie optimalen Kraftstoffverbrauches des Antriebsmotors enthält. Damit kann das Kraftfahrzeug entweder leistungsoptimal oder verbrauchsoptimal betrieben werden.

Zur Abspeicherung der Kennfelder sind Digitalspeicher vorgesehen, wie sie heute als preiswerte serienmäßige Bauelemente erhältlich sind. Hierdurch ergibt sich eine besonders einfache Abspeicherung und Abfrage der Kennfelder bzw. Kennlinien, vorzugsweise in Lesespeichern (ROM's), wobei die jeweiligen Kennfelder von Antriebsmotor bzw. Getriebe gerastert werden und die einzelnen Rastersegmente in die Adressen der Digitalspeicher eingeschrieben werden. Beim Auslesen der Digitalspeicher werden in einfacher Weise die Eingangsgrößen bestimmten Feldern zugeordnet und diese addiert, woraus sich die jeweils angesteuerte Adresse des Digitalspeichers ergibt. Durch einfache Schaltungsmaßnahmen ist es hierbei zusätzlich möglich, die nicht eindeutige Zuordnung von Eingangsgrößen zur Ausgangsgröße im Hysteresebereich eines Schaltmusters eines Stufengetriebes zu berücksichtigen.

Um einerseits das Kraftfahrzeug verbrauchsoptimal betreiben zu können, andererseits jedoch im Bedarfsfalle wie bei herkömmlichen Antriebsmotor-Getriebe-Einheiten auch die volle Antriebsleistung sofort einstellen zu können, ist eine Programmsteuereinheit zur Umschaltung von verbrauchsoptimalem auf leistungsoptimalen Betrieb vorgesehen. Diese Programmsteuereinheit berücksichtigt dabei die beim tatsächlichen Betrieb eines Kraftfahrzeugs auftretenden Bedingungen. So wird in einer ersten Ausführungsform der Programmsteuereinheit diese dann betätigt, wenn die Auslenkungsgeschwindigkeit des Fahrpedals einen vorbestimmten Wert überschreitet, d. h., wenn der Fahrer das Fahrpedal ruckweise betätigt, beispielsweise schnell durchtritt. In einer zweiten Ausführungsform der Programmsteuereinheit wird diese dann betätigt, wenn der vorgegebene Leistungs-Sollwert zu sehr vom Leistungs-Istwert abweicht, d. h., wenn der Fahrer die Antriebsleistung in zu großem Maße erhöhen will.

In einer dritten Ausführungsform der Programmsteuereinheit wird schließlich diese dann betätigt, wenn der vom Fahrpedal eingestellte Leistungs-Sollwert nicht innerhalb einer bestimmten Zeit erreicht wurde. Andererseits sind diese Ausführungsformen der Programmsteuereinheit derart ausgebildet, daß ein Rückschalten vom leistungsoptimalen auf verbrauchsoptimalen Betrieb dann erfolgt, wenn der Motordrehzahl-Istwert den sich aus dem Leistungs-Sollwert ergebenden Motordrehzahl-Sollwert erreicht hat. Dies bedeutet, daß das Fahrzeug bei einer Änderung des Leistungs-Sollwertes und Umschaltung auf leistungsoptimale Betriebsweise immer wieder auf die Kennlinien minimalen Kraftstoffverbrauchs des Antriebsmotors zurückgeregelt wird.

In einer weiteren bevorzugten Ausführungsform der Erfindung ist dem Sollwertgeber für den Leistungs-Sollwert ein Verzögerungsglied nachgeschaltet, wodurch bei kleinen Änderungen des Leistungs-Sollwertes in der Nähe einer Umschaltgeraden des Schaltmusters eines Stufengetriebes ein Umschaltvorgang unterdrückt wird. Hierdurch kann die Anzahl der Schaltvorgänge insgesamt vermindert und damit der Getriebeverschleiß herabgesetzt werden.

In einer weiteren bevorzugten Ausbildung der Erfindung kann dem Motorkennlinienspeicher wahlweise der Motordrehzahl-Istwert oder — während eines Gangwechsels des Stufengetriebes — ein Signal zugeführt werden, das sich aus einer Multiplikation der Getriebeausgangsdrehzahl und des vorgegebenen Übersetzungsverhätnisses ergibt. Dies bewirkt eine Synchronisationshilfe für das Stufengetriebe beim Gangwechsel.

Eine besonders gute Wirkung wird schließlich dadurch erzielt, daß dem Getriebekennlinienspeicher der Leistungs-Sollwert über eine Begrenzerstufe zugeführt wird, die in Abhängigkeit von der zweiten zeitlichen Ableitung der Getriebeausgangsdrehzahl, entsprechend dem Fahrzeugruck, steuerbar ist. Dies bewirkt, daß ein zu starker Fahrzeugruck, beispielsweise beim Gangwechsel, beim Bremsen oder bei zu starkem Gasgeben durch Begrenzung der Getriebeverstellung unterdrückt wird.

### Zeichnung

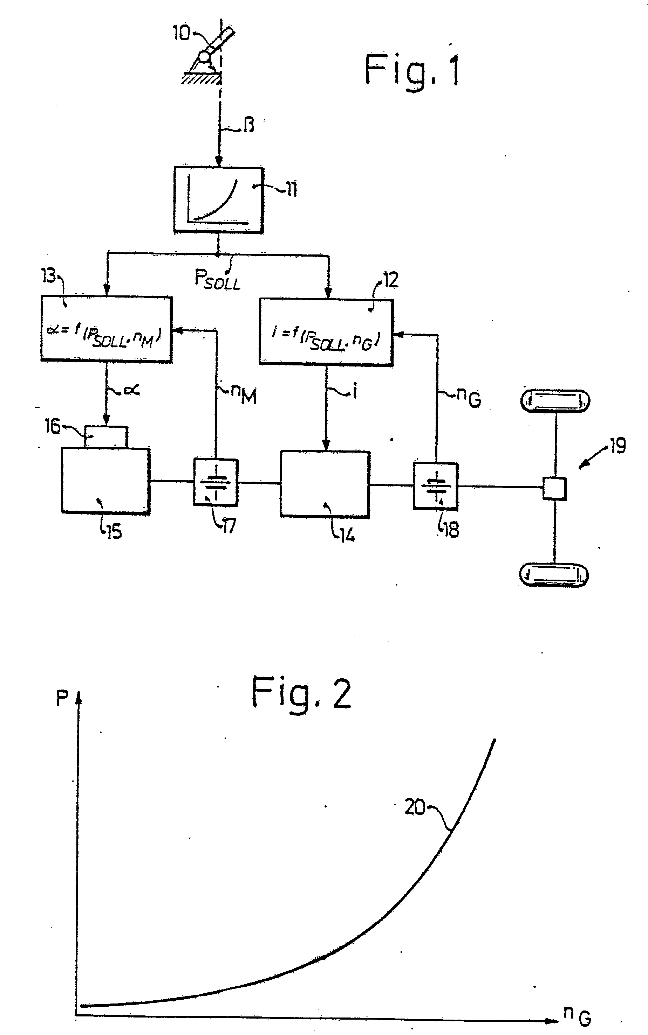

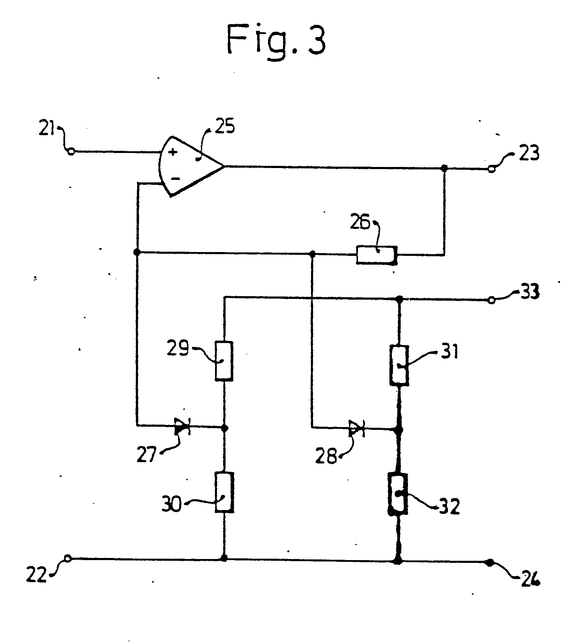

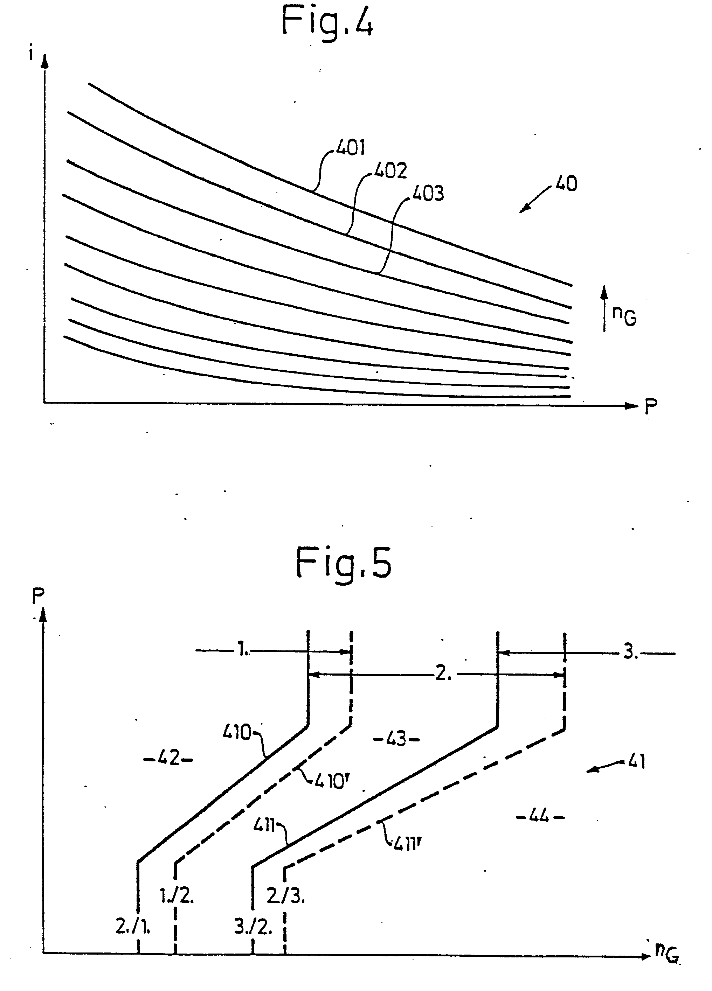

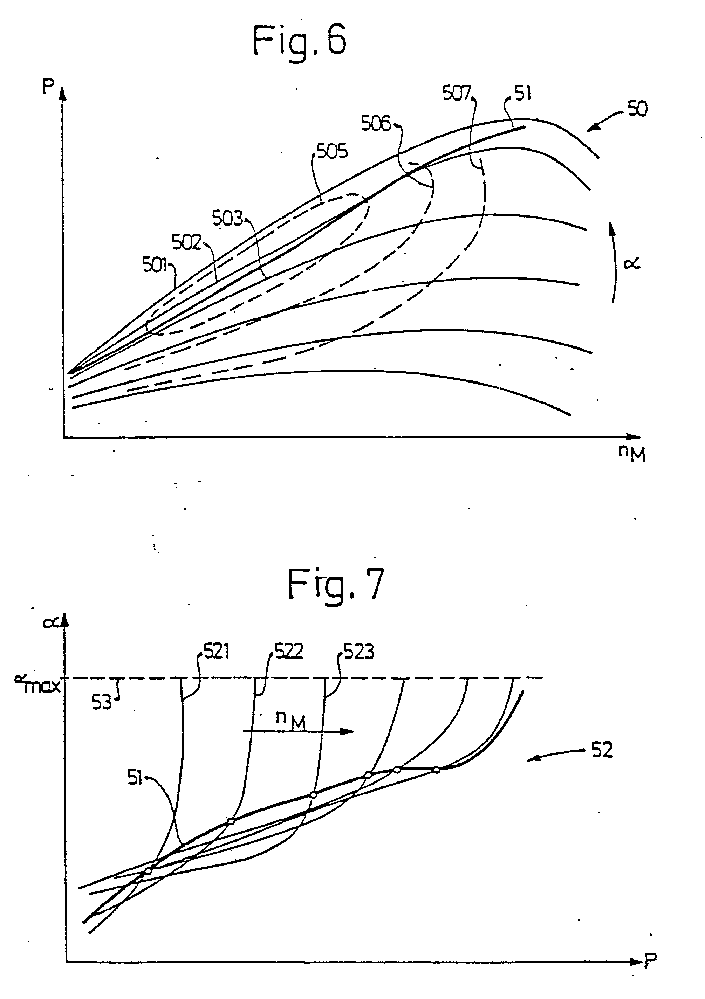

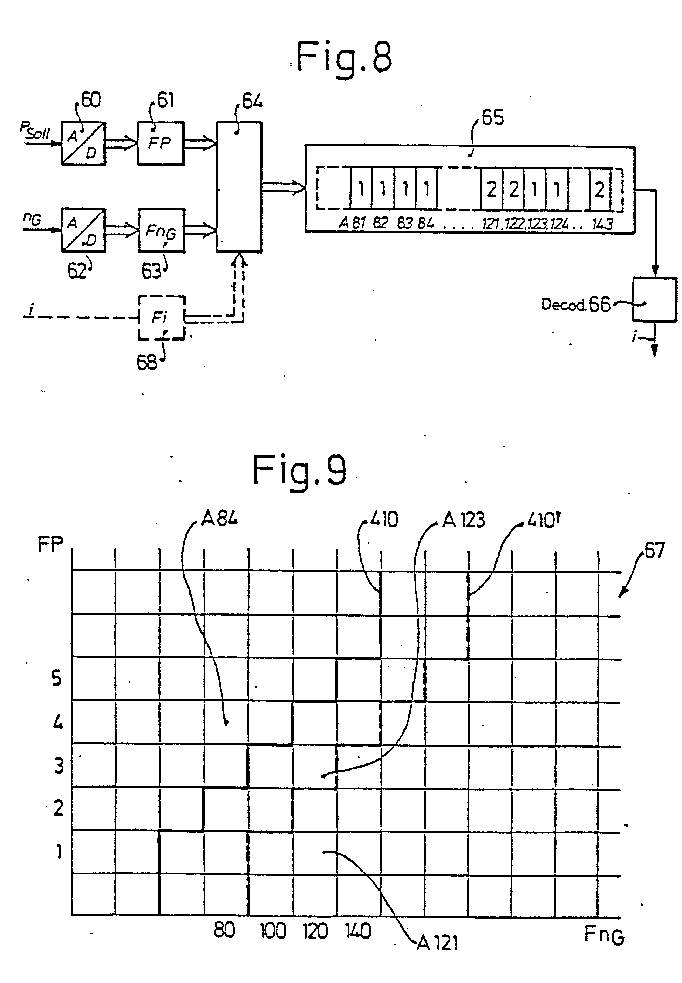

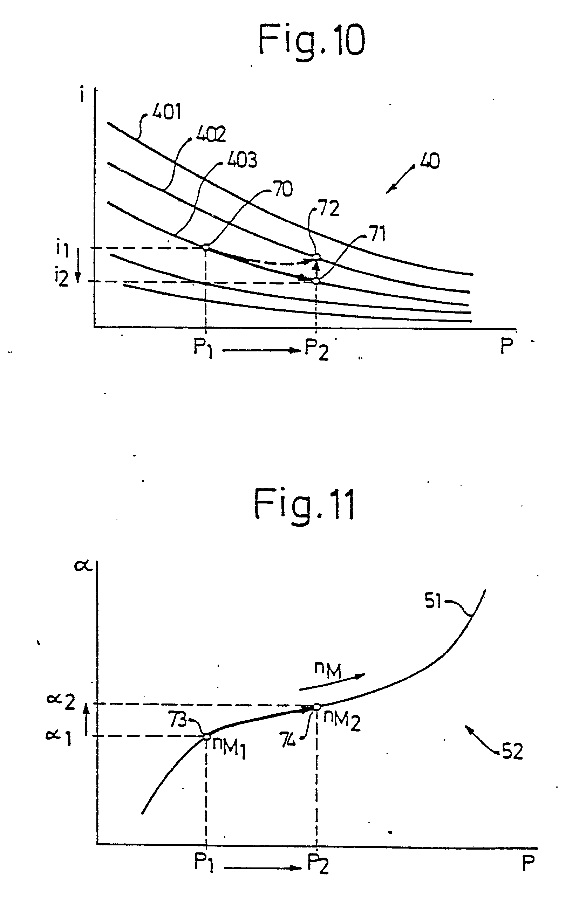

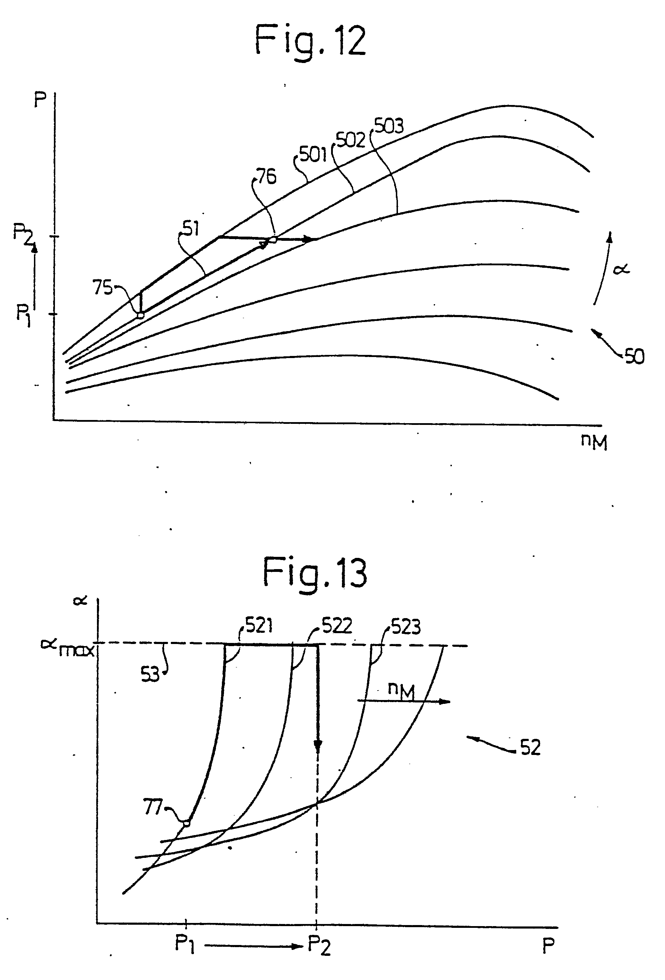

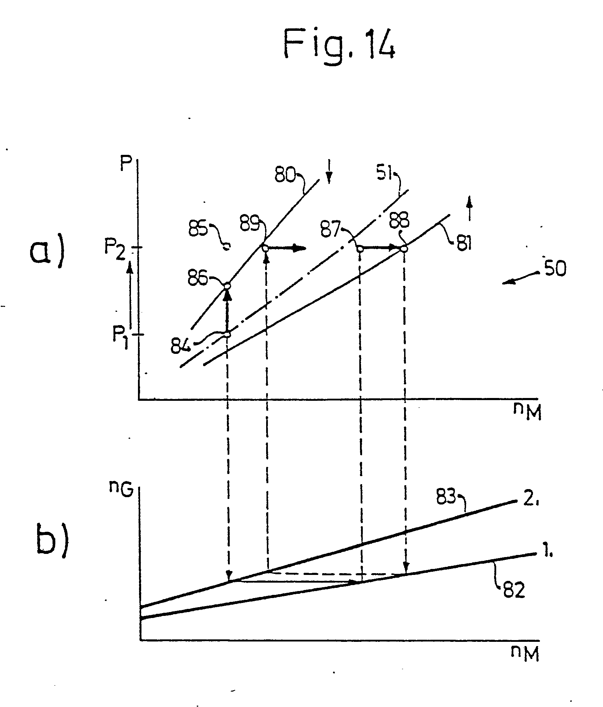

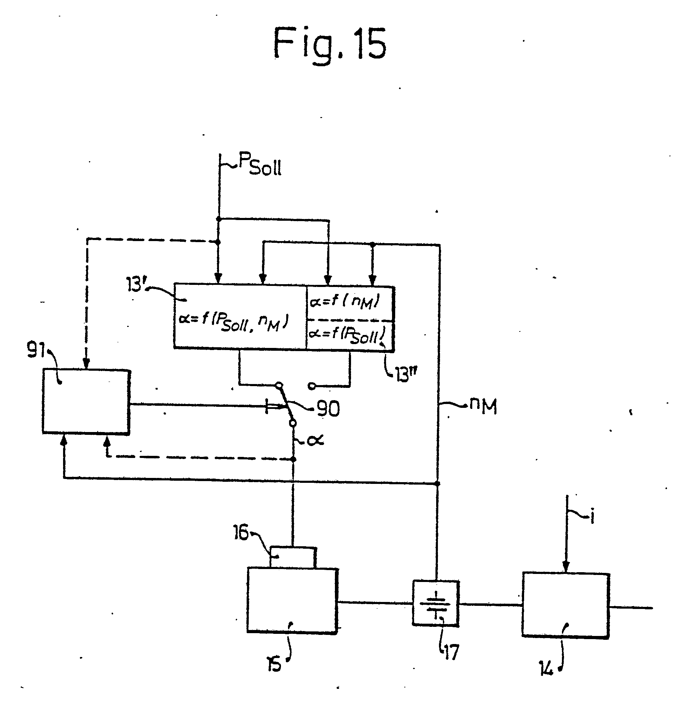

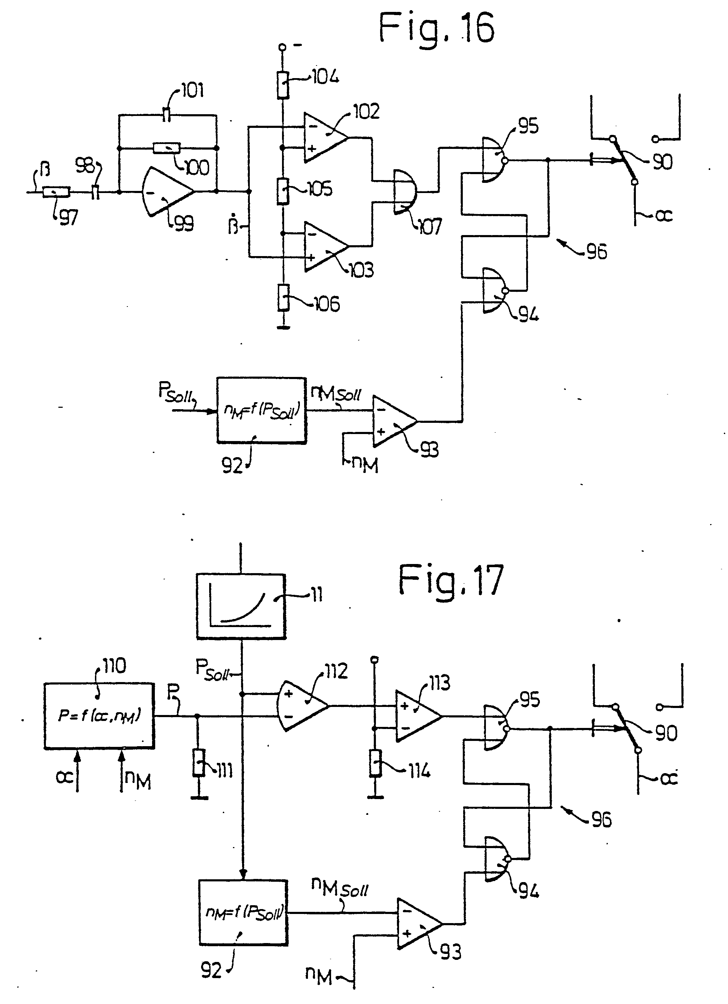

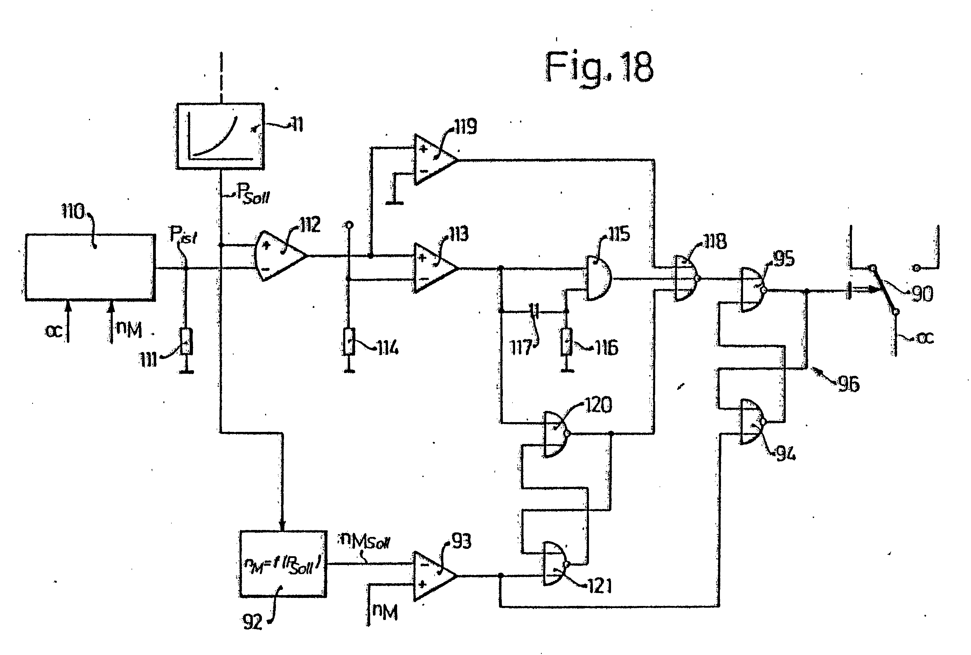

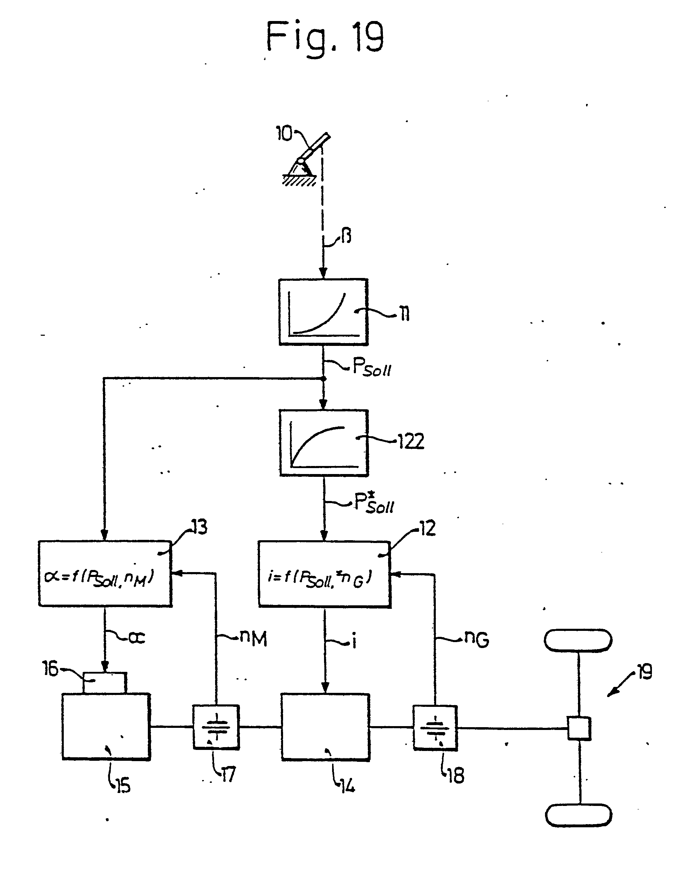

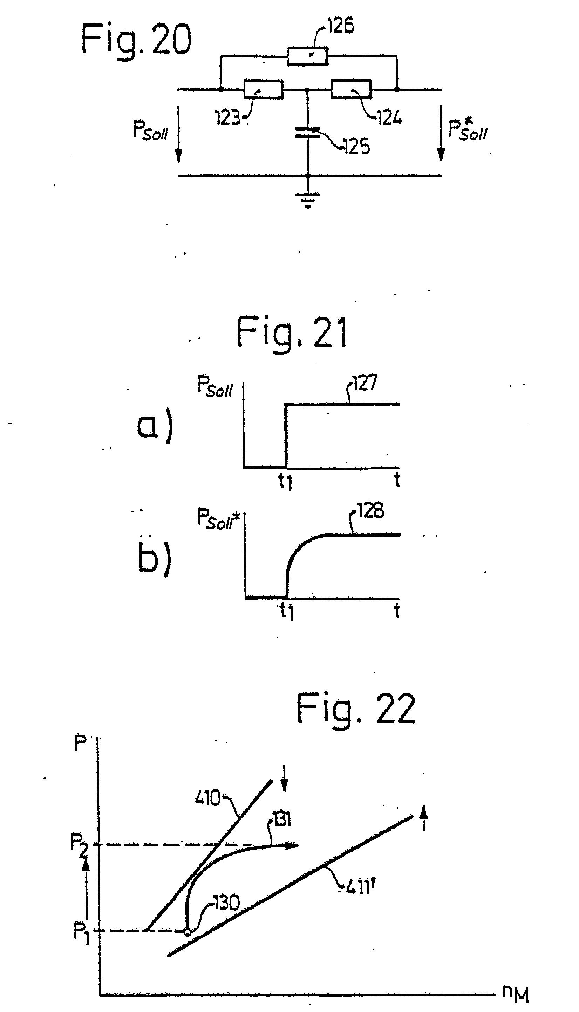

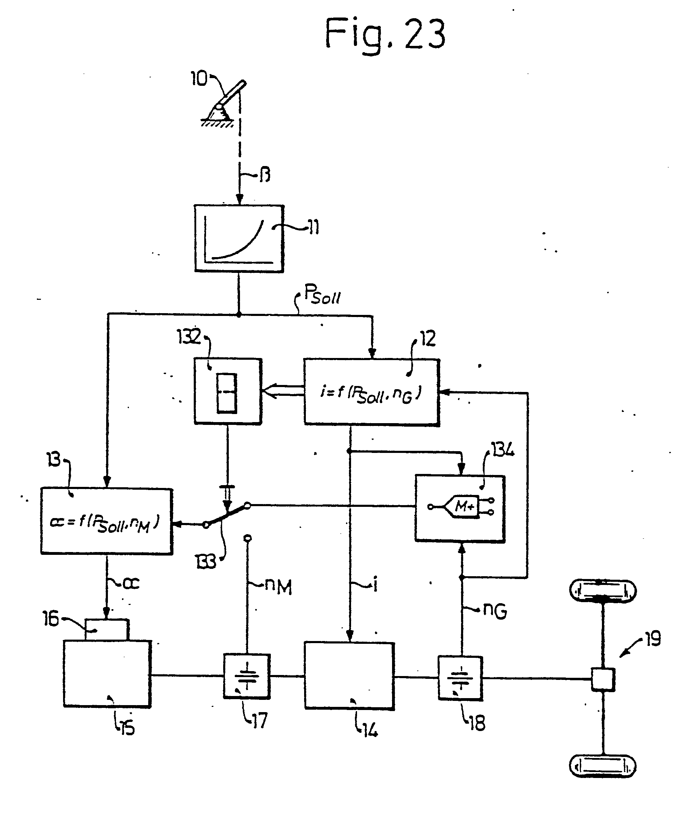

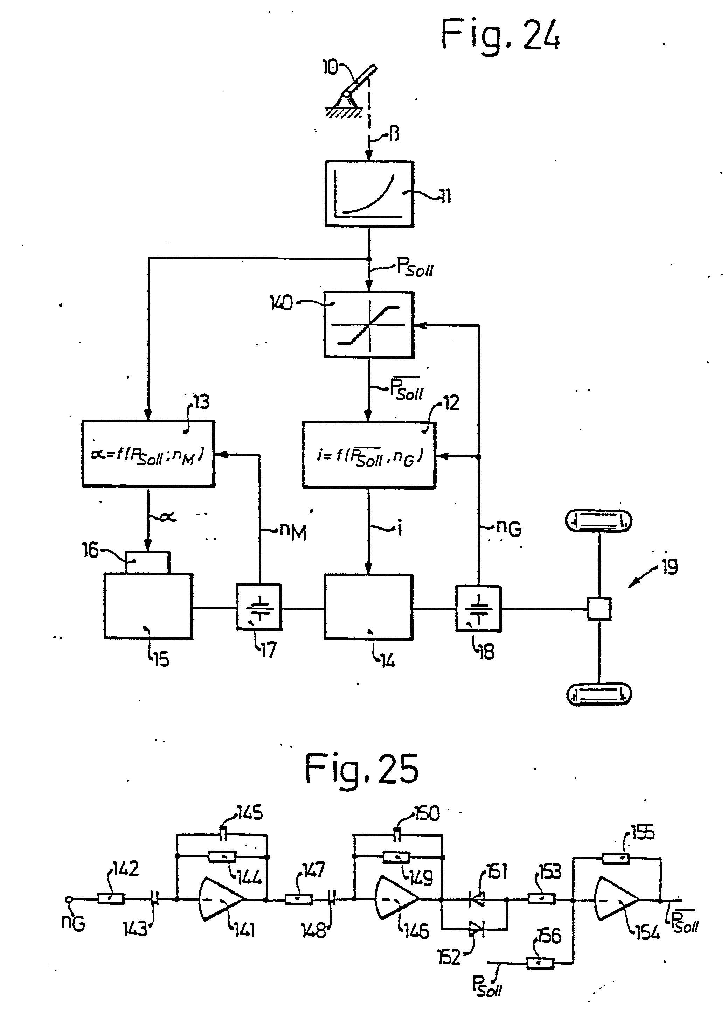

Mehrere Ausführungsformen der erfindungsgemäßen Vorrichtung sowie Kennlinien zur Erläuterung der Betriebsweise dieser Vorrichtungen sind in der Zeichnung dargestellt und in der nachfolgenden Beschreibung näher erläutert. Es zeigen Fig. 1 das Blockschaltbild einer ersten Ausführungsform einer erfindungsgemäßen Vorrichtung; Fig. 2 eine Kennlinie entsprechend der Fahrwiderstandsparabel eines Kraftfahrzeugs; Fig. 3 eine elektronische Schaltung zur Erzeugung einer Kennlinie entsprechend Fig. 2; Fig. 4 das Getriebekennfeld eines stufenlosen Getriebes; Fig. 5 das Getriebekennfeld eines Stufengetriebes; Fig. 6 ein erstes Motorkennfeld einer Brennkraftmaschine; Fig. 7 ein zweites Motorkennfeld einer Brennkraftmaschine; Fig. 8 das Blockschaltbild einer Ausführungsform eines Digitalspeichers zur Abspeicherung eines Kennfeldes; Fig. 9 ein gerastertes Kennfeld zur Erläuterung der Funktion der Vorrichtung nach Fig. 8; Fig. 10 die Lage von Arbeitspunkten in einem Getriebekennfeld eines stufenlosen Getriebes bei Leistungserhöhung; Fig. 11 die Lage von Arbeitspunkten auf einer Kennlinie minimalen Kraftstoffverbrauchs bei Leistungserhöhung; Fig. 12 die Lage von Arbeitspunkten in einem Motorkennfeld bei Leistungserhöhung; Fig. 13 die Lage von Arbeitspunkten in einem weiteren Motorkennfeld bei Leistungserhöhung; Fig. 14 die Lage von Arbeitspunkten in einem Getriebekennfeld eines Stufengetriebes bei Leistungserhöhung; Fig. 15 das Blockschaltbild einer zweiten Ausführungsform einer erfindungsgemäßen Vorrichtung mit einer Programmschalteinheit; Fig. 16 das Schaltbild einer ersten Ausführungsform einer Programmschalteinheit; Fig. 17 das Schaltbild einer zweiten Ausführungsform einer Programmschalteinheit; Fig. 18 das Schaltbild einer dritten Ausführungsform einer Programmschalteinheit; Fig. 19 das Blockschaltbild einer dritten Ausführungsform einer erfindungsgemäßen Vorrichtung mit einem Verzögerungsglied; Fig. 20 das Schaltbild eines Verzögerungsgliedes; Fig. 21 Signalverläufe zur Veranschaulichung der Sprungantwort der Schaltung nach Fig. 20; Fig. 22 die Lage von Arbeitspunkten in einem Getriebekennfeld eines Stufengetriebes bei Leistungserhöhung und Verwendung einer Vorrichtung entsprechend Fig. 19; Fig. 23 das Blockschaltbild einer vierten Ausführungsform einer erfindungsgemäßen Vorrichtung mit einer Synchronisationseinrichtung; Fig. 24 das Blockschaltbild einer fünften Ausführungsform einer erfindungsgemäßen Vorrichtung mit einer Ruckbegrenzungsstufe; Fig. 25 das Schaltbild einer Ruckbegrenzungsstufe.

### Beschreibung der Erfindung

Die erfindungsgemäße Vorrichtung umfaßt ein Regelsystem für eine Antriebsmotor-Getriebe-Einheit, bei der sowohl das Getriebe wie auch der Antriebsmotor jeweils über Kennlinienspeicher gesteuert werden. Ausgangsgröße ist dabei ein von einem Sollwertgeber, beispielsweise einem Fahrpedal, vorgegebener Leistungs-Sollwert $P_{soll}$. Der Getriebekennlinienspeicher enthält je nach Art des verwendeten Getriebes das Kennfeld eines stufenlosen, beispielsweise eines hydrostatischen Getriebes oder das eines Stufengetriebes, wobei das Kennfeld in Abhängigkeit vom Leistungs-Sollwert $P_{soll}$ und der Fahrgeschwindigkeit die jeweilige Getriebeübersetzung i bzw. den einzulegenden Gang festlegt. Im Motorkennlinienspeicher andererseits ist beispielsweise das Kennfeld einer Brennkraftmaschine abgespeichert, dem die Drosselklappenstellung $\alpha$ in Abhängigkeit von dem Leistungs-Sollwert $P_{soll}$ und der Motordreh-

zahl $n_M$ entnommen werden kann. Besondere Bedeutung hat dabei die Kennlinie des Kennfeldes der Brennkraftmaschine, bei der sich ein minimaler Kraftstoffverbrauch ergibt.

Erfindungsgemäß wird zunächst die jeweilige Getriebeübersetzung i bzw. der einzulegende Gang in Abhängigkeit vom Leistungs-Sollwert $P_{soll}$ über den Getriebekennlinienspeicher festgelegt. Die Verstellung des Getriebes bewirkt eine Änderung der Motordrehzahl $n_M$ und die Drosselklappenstellung $\alpha$ der Brennkraftmaschine wird nun entsprechend der Motordrehzahl $n_M$ nachgeregelt. Dabei ergeben sich im Prinzip zwei Möglichkeiten:

a) Ist eine schnelle Leistungsverstellung gewünscht, steuert man die Drosselklappenstellung $\alpha$ über das Getriebekennfeld, d. h. in Abhängigkeit von dem Leistungs-Sollwert $P_{soll}$ und der Motordrehzahl $n_M$. Dann verstellt sich die Drosselklappe sofort in der Weise, daß die gewünschte Leistung zur Verfügung steht.

b) Für eine verbrauchsoptimale Regelung kann die Drosselklappenstellung $\alpha$ auch entlang der Kennlinie minimalen Verbrauchs der Brennkraftmaschine in Abhängigkeit von der Motordrehzahl $n_M$ nachgeführt werden. Hierbei stellt sich die gewünschte Leistung nicht sofort ein, der Übergang von dem einen Arbeitspunkt zum anderen Arbeitspunkt vollzieht sich entlang der Linie minimalen Verbrauchs.

Da eine verbrauchsoptimale Regelung entsprechend b) zwangsläufig ein verzögertes Bereitstellen der gewünschten Motorleistung mit sich bringt, kann diese Betriebsart sicher nicht in allen Fahrsituationen eingesetzt werden. Ist nämlich, wie beispielsweise beim Überholen, ein sofortiges Bereitstellen der gewünschten Leistung erforderlich, muß auf eine Regelung nach a) übergegangen werden.

Die erfindungsgemäße Vorrichtung realisiert nun eine derartige kombinierte Regelung, bei der in normalem Betrieb verbrauchsoptimal gefahren wird, bei der jedoch im Bedarfsfall auch auf eine leistungsoptimale Regelung übergegangen werden kann.

## Grundanordnung

Fig. 1 zeigt das Blockschaltbild einer ersten Ausführungsform einer erfindungsgemäßen Vorrichtung.

Mit 10 ist ein Fahrpedal angedeutet, von dem ein der Fahrpedalauslenkung $\beta$ entsprechendes Signal auf eine Fahrwiderstandskennlinienstufe 11 gelangt, deren Ausgang an jeweils einen Eingang eines Getriebekennlinienspeichers 12 und eines Motorkennlinienspeichers 13 angeschlossen ist. Der Ausgang des Getriebekennlinienspeichers 12 steht in Wirkungsverbindung mit einem Getriebe 14, der Ausgang des Motorkennlinienspeichers 13 mit dem Steuereingang einer Brennkraftmaschine 15, im vorliegenden Fall dargestellt durch einen Betriebsgemischerzeuger 16, beispielsweise einen Vergaser oder ein Kraftstoffeinspritzsystem. Auf der Verbindungswelle zwischen Brennkraftmaschine 15 und Getriebe 14 befindet sich ein Motordrehzahl-Geber 17, der an einen weiteren Eingang des Motorkennlinienspeichers 13 angeschlossen ist. In entsprechender Weise befindet sich auf der Getriebeabtriebswelle ein Getriebeausgangsdrehzahl-Geber 18, der an einen weiteren Eingang des Getriebekennlinienspeichers angeschlossen ist. Die Getriebeabtriebswelle arbeitet schließlich auf einen Abtrieb 19. Das Signal $\beta$ entsprechend der Fahrpedalauslenkung gelangt über die Fahrwiderstandskennlinienstufe 11, die weiter unten anhand der Fig. 2 und 3 beschrieben wird, auf Eingänge der Kennlinienspeicher 12, 13. Im Getriebekennlinienspeicher 12 ist das Kennfeld eines Getriebes: Getriebeübersetzung i in Abhängigkeit vom Leistungs-Sollwert $P_{soll}$ und der Getriebeausgangsdrehzahl $n_G$ abgespeichert. Ein Getriebeausgangsdrehzahl-Signal entsprechend der Fahrgeschwindigkeit $V_F$ des Kraftfahrzeugs wird dem Getriebekennlinienspeicher 12 vom Getriebeausgangsdrehzahl-Geber 18 zugeführt. An seinem Ausgang erscheint daher die sich jeweils aus dem Getriebekennfeld $i = f (P_{soll}, n_G)$ ergebende Getriebeübersetzung i bzw. der einzulegende Gang i. Mit dieser Größe wird das Getriebe 14 eingestellt. Da die Fahrgeschwindigkeit $V_F$ sich zunächst nicht ändert, ergibt sich aufgrund der Getriebeverstellung eine Änderung der Motordrehzahl $n_M$. Im Motorkennlinienspeicher 13 ist das Kennfeld einer Brennkraftmaschine: Drosselklappenwinkel $\alpha$ in Abhängigkeit vom Leistungs-Solwert $P_{soll}$ und der Motordrehzahl $n_M$ abgespeichert. An seinem Ausgang ergibt sich daher in Abhängigkeit vom Leistungs-Sollwert $P_{soll}$ und der Motordrehzahl $n_M$ nach Maßgabe des Kennfeldes $\alpha = f (P_{soll}, n_M)$ ein Steuersignal $\alpha_{soll}$ für die Brennkraftmaschine 15.

## Leistungssollwert-Kennlinie

Fig. 2 zeigt eine parabelartige Kennlinie 20, die sogenannte Fahrwiderstandskennlinie eines Kraftfahrzeugs, d. h., die Abhängigkeit der Antriebsleistung von der Fahrgeschwindigkeit. In der Fahrwiderstandskennlinienstufe 11 wird die Eingangsgröße $\beta$ entsprechend der Kennlinie 20 in ein dem Leistungs-Sollwert $P_{soll}$ entsprechendes Signal umgesetzt. Die Verwendung der Fahrwiderstandskennlinienstufe 11 bewirkt eine Linearisierung des Pedalweges, d. h., man erhält einen etwa fahrgeschwindigkeitsproportionalen Pedalweg.

Eine Schaltung mit der eine Kennlinie entsprechend der Kennlinie 20 nach Fig. 2 realisiert werden kann, ist in Fig. 3 angegeben. Das Kennliniennetzwerk befindet sich dabei zwischen Eingangsklemmen 21, 22 und Ausgangsklemmen 23, 24. Die Eingangsklemme 21 ist mit dem nicht invertierenden Eingang eines Operationsverstärkers 25 verbunden, der mit einem Widerstand 26 von seinem Ausgang, der mit der Ausgangsklemme 23 verbunden ist, auf seinen invertierenden Eingang gegengekoppelt ist. Vom invertierenden Eingang des Operationsverstärkers 25 führen weiterhin Dioden 27, 28 zu Mittelabgriffen von Spannungsteilern 29, 30 bzw. 31, 32, die zwischen eine mit einer Bezugsspannung beschaltete Klemme 33 und die Verbindungsleitung zwischen der Eingangsklemme 22 und der Ausgangsklemme 24 geschaltet sind. Der Verstärkungsfaktor des Operationsverstärkers 25 ist zunächst vom Gegenkopplungswiderstand 26 bestimmt. Überschreitet die Spannung am Ausgang des Operationsverstärkers 25 jedoch vorbestimmte, durch das Spannungsteilerverhältnis 29, 30 bzw. 31, 32 bestimmte Beträge, werden die Dioden 27 und 28 nacheinander durchgeschaltet, und es ergeben sich unterschiedliche Verstärkungsfaktoren. Auf diese Art und Weise wird die parabelartige Kennlinie 20 entsprechend Fig. 2 durch eine stückweise Annäherung von drei Geraden unterschiedlicher Steigung elektrisch nachgebildet.

### Getriebekennfeld

Fig. 4 zeigt das Getriebekennfeld 40 eines stufenlosen Getriebes. Eine Kurvenschar, bestehend aus Kennlinien 401, 402, 403 stellt die Abhängigkeit des Getriebeübersetzungsverhältnisses i von der übertragenen Leistung P dar, wobei die Kennlinien 401, 402, 403 nach der Getriebeausgangsdrehzahl $n_G$, entsprechend der Fahrgeschwindigkeit $V_F$ parametriert sind. So ist die Kennlinie 401 beispielsweise die Kennlinie der höchsten Fahrgeschwindigkeit $V_F$ und die Kennlinie 403 diejenige einer niedrigen Fahrgeschwindigkeit $V_F$.

Entsprechend zeigt Fig. 5 das Getriebekennfeld 41 eines Stufengetriebes. Darin sind die Bereiche der einzelnen Getriebegänge in Abhängigkeit von der übertragenen Leistung P und der Getriebeausgangsdrehzahl $n_G$, entsprechend der Fahrgeschwindigkeit $V_F$ dargestellt. Durch die Schaltgeraden 410, 410' bzw. 411, 411' werden Bereiche 42, 43, 44 für die einzelnen Getriebegänge festgelegt. Die Schaltgerade 410 ist dabei die Rückschaltgerade vom zweiten in den ersten Gang, die Schaltgerade 410' die Hochschaltgerade vom ersten in den zweiten Gang, die Schaltgerade 411 die Rückschaltgerade vom dritten in den zweiten Gang und die Schaltgerade 411' die Hochschaltgerade vom zweiten in den dritten Gang. Durch die Hysterese zwischen den Rückschaltgeraden 410, 411 und den Hochschaltgeraden 410', 411' wird das sogenannte »Pendeln« des Getriebes vermieden, d. h., es wird nach dem Rückschalten vermieden, daß aufgrund des Ansteigens der Fahrgeschwindigkeit $V_F$ sofort wieder hochgeschaltet wird.

Insgesamt ergibt sich aus dem Getriebekennfeld 41 für ein Stufengetriebe ein Bereich für den ersten Gang, der von der Ordinate bis zur Kennlinie 410', ein Bereich für den zweiten Gang, der von der Kennlinie 410 bis zur Kennlinie 411' reicht und ein Bereich für den dritten Gang, der sich von der Kennlinie 411 ab zu positiven Abszissenwerten erstreckt. Dabei ergibt sich in den Bereichen, die mit 42, 43, 44 angedeutet sind, eine eindeutige Zuordnung zum ersten bzw. zweiten bzw. dritten Gang, während zwischen den jeweiligen Hoch- und Rückschaltgeraden, beispielsweise 410, 410', ein Wertepaar P, $n_G$ keine eindeutige Zuordnung zu einem Gang ergibt, sofern nicht bekannt ist, in welchem sich das Getriebe gerade befindet.

### Motorkennfeld

Fig. 6 zeigt das Motorkennfeld 50 einer Brennkraftmaschine. Dabei ist die Motorleistung P über der Motordrehzahl $n_M$ aufgetragen und nach der Drosselklappenstellung $\alpha$ parametriert. Hieraus ergeben sich Kennlinien 501, 502, 503, wobei die Kennlinie 501 der Vollastanreicherung der Brennkraftmaschine, d. h. der maximalen Drosselklappenöffnung $\alpha$ entspricht. In das Motorkennfeld 50 lassen sich Kennlinien 505, 506, 507 gleichen Kraftstoffverbrauchs eintragen. Die Kenlinie 505 bezeichnet dabei die Kennlinie eines relativ niedrigen Kraftstoffverbrauchs, die Linie 507 diejenige eines hohen Kraftstoffverbrauchs. Aus den Kennlinien 505, 506, 507 ergibt sich insgesamt über der Motordrehzahl $n_M$ eine Linie 51 optimalen Kraftstoffverbrauchs. Dies bedeutet, daß einer bestimmten Motordrehzahl $n_M$ bei minimalem Kraftstoffverbrauch eine bestimmte Leistung P und ein bestimmter Drosselklappenwinkel $\alpha$ zugeordnet ist. Eine andere Darstellung des Motorkennfeldes 50 entsprechend Fig. 6 ist aus Fig. 7 ersichtlich. Das darin aufgetragene Motorkennfeld 52 gibt die Drosselklappenstellung $\alpha$ mit einer Linie 53 maximaler Drosselklappenstellung $\alpha$ in Abhängigkeit von der Leistung P an, wobei die Kennlinien 521, 522, 523 des Motorkennfeldes 52 nach der Motordrehzahl $n_M$ parametriert sind. Die Kennlinie 521 gehört dabei zu einer relativ niedrigen Motordrehzahl, die Kennlinie 523 zu einer höheren Motordrehzahl. Ensprechend Fig. 6 ergibt sich auch in Fig. 7 die Linie optimalen Kraftstoffverbrauchs 51 im Motorkennfeld 52.

### Kennfeldansteuerung

Die Kennfelder entsprechend Fig. 4, 5, 6, 7 bzw. einzelne Kennlinien wie beispielsweise die optimalen Kraftstoffverbrauchs 51 sind in den Kennlinienspeichern 12 bzw. 13 abgespeichert. Die Kennlinienspeicher 12, 13 sind so aufgebaut, wie dies beispielsweise für den Getriebekennlinienspeicher 12 in Fig. 8 veranschaulicht ist. Die

eine Eingangsgröße $P_{soll}$ gelangt über einen Analog-Digital-Wandler 60 und eine Wichtungsstufe 61, die andere Eingangsgröße $n_G$ gelangt über einen Analog-Digital-Wandler 62 und eine Wichtungsstufe 63 auf einen Addierer 64, der an einen Digitalspeicher 65 angeschlossen ist. Der Digitalspeicher 65 ist vorzugsweise als Lesespeicher (ROM) ausgebildet, d. h., er enthält eine Vielzahl von durch Adressen gekennzeichneten Speicherplätzen, auf denen Kennwerte eingeschrieben sind. An den Ausgang des Digitalspeichers 65 ist ein Dekodierer 66 angeschlossen.

Um ein Kennfeld in dem Digitalspeicher 65 einschreiben zu können, ist es erforderlich, das Kennfeld zunächst mit einem Raster 67, wie in Fig. 9 dargestellt, zu rastern. Dann kann jedem Rastersegment sowohl auf der Abszisse wie auch auf der Ordinate ein entsprechender Feldwert zugeordnet werden, wie dies in Fig. 9 für den Fall eines Kennfeldes eines Stufengetriebes dargestellt ist. Die Leistungs-Feldwerte FP sind dabei mit 1, 2, 3, 4, 5, d. h., mit einer Stufung von jeweils 1, gekennzeichnet; die Getriebeausgangsdrehzahl-Feldwerte $Fn_G$ sind jeweils in Schritten von 20 gestuft. Die Zuordnung des jeweiligen Leistungswertes P bzw. Getriebeausgangsdrehzahlwertes $n_G$ zu den entsprechenden Feldwerten FP, $Fn_G$ erfolgt in den Wichtungsstufen 61, 63. Durch Addition der beiden Feldwerte eines bestimmten Rastersegments erhält man nun die zugehörige Adresse des Digitalspeichers 65. Wird beispielsweise der Leistungswert P mit dem Leistungs-Feldwert FP=4 und der Getriebeausgangsdrehzahlwert $n_G$ mit dem Getriebeausgangsdrehzahl-Feldwert $Fn_G$=80 gewichtet, ergibt dies in der Addierstufe 64 die Adresse 4+80=A84. Dieses Rastersegment liegt jedoch links von der Rückschaltgeraden 410 des Getriebekennfeldes und ist somit eindeutig dem ersten Gang zugeordnet. Entsprechend ist in den Speicherplatz mit der Adresse A84 des Digitalspeichers 65 der Wert 1 eingeschrieben. Entsprechend ist auf den Speicherplatz mit der Adresse A121 des Digitalspeichers 65 der Wert 2 eingeschrieben, da sich dieses Rastersegment rechts von der Hochschaltgeraden 410' befindet. Auf dem Speicherplatz mit der Adresse A123 ist der Wert 1 eingeschrieben, obwohl die Zuordnung dieses Rastersegments nicht eindeutig ist, da in diesem Punkt sowohl der erste wie auch der zweite Gang zulässig ist. Um hier eine klare Unterscheidung herbeizuführen, ist an einen weiteren Eingang des Addierers 64 eine Wichtungsstufe 68 angeschlossen, in der in Abhängigkeit von dem jeweils eingelegten Gang i ein Gang-Feldwert Fi von beispielsweise Fi = +40 für den zweiten Gang und Fi = +80 für den dritten Gang gebildet wird. In alle Speicherplätze entsprechend Rastersegmenten links von der Hochschaltgeraden 410' ist der Wert 1 eingeschrieben.

Wird das Fahrzeug aus dem Stand beschleunigt und befindet sich das Geriebe bei eingelegtem ersten Gang in dem Rastersegment des Getriebekennfeldes, daß der Adresse A123

zugeordnet ist, wurde folglich auch dem Digitalspeicher 65 der Wert 1 in die Dekodierstufe 66 ausgelesen. Erhöht sich nun die Fahrgeschwindigkeit $V_F$ weiterhin und damit die Getriebeausgangsdrehzahl $n_G$, entsprechend einer Erhöhung des Getriebeausgangs-Feldwertes $Fn_G$ bei gleichbleibendem Leistungs-Feldwert FP, ergibt sich als neue Adresse A143 der im Digitalspeicher 65 der Wert 2 zugeordnet ist. Es wird folglich in den zweiten Gang hochgeschaltet. Dies bewirkt jedoch wiederum, daß über die Wichtungsstufe 68 der dem zweiten Gang zugeordnete Gang-Feldwert Fi von +40 dem Addierer 64 zugeführt wird. Es ergibt sich dadurch eine scheinbare Adressenverschiebung von A143 auf A183. Für das Getriebe hat dies jedoch keine Bedeutung, da auf dem Speicherplatz des Digitalspeichers 65 mit der Adresse A183 ebenfalls der Wert 2 eingeschrieben ist. Erst wenn sich die Getriebeausgangsdrehzahl $n_G$ wieder auf einen Wert entsprechend dem Getriebeausgangsdrehzahl-Feldwert $Fn_G$=80 vermindert hat, ergibt sich durch Addition der Feldwerte FP, $Fn_G$, Fi die Adresse A123, der, wie oben beschrieben, der Wert 1 im Digitalspeicher 65 zugeordnet ist. Dies bedeutet, daß wieder in den ersten Gang zurückgeschaltet wird. Durch Addition eines konstanten Gang-Feldwertes Fi in Abhängigkeit vom eingelegten Gang wurde daher erreicht, daß zwischen der Hochschaltgeraden 410' und der Rückschaltgeraden 410 eine Hysterese entsteht, deren Betrag gleich dem Betrag des Gang-Feldwertes Fi für dn zweiten Gang ist. Im genannten Beispiel der Gang-Feldwerte Fi = +40 für den zweiten Gang und Fi = +80 für den dritten Gang ergeben sich gleichbreite Hysteresen für die Schaltgeraden des zweiten und dritten Gangs. Es ist jedoch auch möglich, den Gang-Feldwert Fi für den dritten Gang größer als doppelt so groß wie den des zweiten Gangs zu wählen; es entsteht dann im dritten Gang eine größere Schalthysterese.

## Betriebsweise

### Stufenloses Getriebe — verbrauchsoptimale Regelung

In Fig. 10 ist die Betriebsweise einer erfindungsgemäßen Vorrichtung bei einem stufenlosen Getriebe mit verbrauchsoptimaler Regelung dargestellt. Dies bedeutet, daß der Getriebekennlinienspeicher 12 entsprechnd Fig. 1 das Getriebekennfeld 40 eines stufenlosen Getriebes entsprechend Fig. 4 und der Motorkennlinienspeicher 13 die Linie optimalen Kraftstoffverbrauchs 51 entsprechend Fig. 6 oder 7 enthält.

Das Kraftfahrzeug befindet sich in einem Arbeitspunkt 70, dem ein Leistungswert $P_1$ und eine Getriebeübersetzung $i_1$ zugeordnet sind. der Leistungs-Sollwert $P_{soll}$ wird nun von $P_1$ auf $P_2$ erhöht. Da sich die Fahrgeschwindigkeit $V_F$ zunächst nicht ändert, wird die Getriebeübersetzung i vom Ausgangswert $i_1$ auf den neuen Wert

$i_2$ entlang der Kennlinie 403 konstanter Fahrgeschwindigkeit $V_F$ verändert und erreicht schließlich den neuen Arbeitspunkt 71. Eine Änderung der Getriebeübersetzung i bewirkt jedoch bei als konstant angenommener Fahrgeschwindigkeit $V_F$ eine Änderung der Motordrehzahl $n_M$. Es sei angenommen, daß die Brennkraftmaschine 15 im Ausgangspunkt entsprechend Arbeitspunkt 70 aus Fig. 10 den Arbeitspunkt 73 entsprechend Fig. 11 eingenommen habe. Diesem Arbeitspunkt 73 ist bei dem Leistungswert $P_1$ der Wert der Drosselklappenstellung $\alpha_1$ bei einer Motordrehzahl $n_{M1}$ zugeordnet. Erhöht sich nun aufgrund der Änderung der Getriebeübersetzung die Motordrehzahl auf den neuen Wert $n_{M2}$, bedeutet dies entsprechend der Kennlinie 52 nach Fig. 11 eine Änderung des Wertes der Drosselklappenstellung auf den Wert $\alpha_2$. Damit ist der neue Arbeitspunkt 74 im Motorkennlinienfeld eingenommen und die Brennkraftmaschine hat während des Leistungsverstellvorgangs die Linie optimalen Kraftstoffverbrauchs nicht verlassen.

Überträgt man diese Betriebsweise in das Motorkennfeld 50 entsprechend Fig. 6, ergeben sich die in Fig. 12 dargestellten Verhältnisse. Es wurde hierbei der Arbeitspunkt 76 vom Arbeitspunkt 75 aus über die Linie optimalen Kraftstoffverbrauchs 51 angesteuert.

Die Kennlinie optimalen Kraftstoffverbrauchs 51 ergibt sich im Motorkennlinienspeicher 13 in vorteilhafter Weise durch eine an sich bekannte Kennlinienstufe, die ähnlich wie die Fahrwiderstandskennlinienstufe 11 aufgebaut sein kann, wie dies in Fig. 3 dargestellt ist. Bei Verwendung eines Motorkennlinienspeichers 13 entsprechend Fig. 8 kann die Kennlinie durch Unterdrückung der Adressen oberhalb der Linie 51 optimalen Kraftstoffverbrauchs im Kennfeld 50 gewonnen werden. Auf diese Weise ist sichergestellt, daß bei Leistungserhöhung von $P_1$ auf $P_2$ der Arbeitspunkt der Brennkraftmaschine 15 die Kennlinie 51 nicht verlassen kann.

### Stufenloses Getriebe — leistungsoptimale Regelung

Für eine leistungsoptimale Regelung eines stufenlosen Getriebes wird im Motorkennlinienspeicher 13 ein Motorkennfeld 50 oder 52 entsprechend Fig. 6, 7 ausgewertet. Eine solche leistungsoptimale Regelung ist in Fig. 13 veranschaulicht. Da die Drosselklappenstellung $\alpha$ am Ausgang des Motorkennlinienspeichers 13 bei leistungsoptimaler Regelung in Abhängigkeit von der Motordrehzahl $n_M$ und dem Leistungs-Sollwert $P_{soll}$ ermittelt wird, ergibt sich entsprechend Fig. 12 ausgehend von einem Arbeitspunkt 75 und einem angewählten Leistungs-Sollwert $P_2$ eine Vergrößerung der Drosselklappenstellung $\alpha$. Im Kennlinienfeld 52 nach Fig. 13 bedeutet dies, daß, ausgehend vom Arbeitspunkt 77, die Drosselklappenstellung $\alpha$ zunächst

schnell bis zur Linie maximaler Drosselklappenstellung 53 vergrößert wird. Die Brennkraftmaschine 15 wird nun entlang der Linie maximaler Drosselklappenstellung 53 bei steigender Motordrehzahl $n_M$ in ihrer Leistung hochgeregelt. Ist der angewählte Leistungs-Sollwert $P_2$ erreicht, kann die Drosselklappenstellung $\alpha$ bei immer noch ansteigender Motordrehzahl $n_M$ wieder verringert werden, wie dies aus Fig. 13 ersichtlich ist.

Da in diesem Fall die Leistung schneller zur Verfügung gestellt wird, ergibt sich für den Arbeitspunkt ein Verlauf, wie er in Fig. 10 gestrichelt eingezeichnet ist. Vom Arbeitspunkt 70 bewegt sich der Arbeitspunkt nicht mehr näherungsweise entlang der Kennlinie 403 konstanter Fahrgeschwindigkeit, die Fahrgeschwindigkeit erhöht sich vielmehr und die gewünschte Leistung $P_2$ wird im Arbeitspunkt 72 erreicht.

Bei dieser leistungsoptimalen Regelung steigt jedoch die Motordrehzahl $n_M$ auch über die Linie optimalen Kraftstoffverbrauchs 51 hinaus an, d. h., die Regelung wird in diesem Fall nicht wie bei der verbrauchsoptimalen Regelung im neuen Arbeitspunkt 76 aus Fig. 12 beendet. Die Motordrehzahl $n_M$ erhöht sich vielmehr weiterhin, bis die Fahrwiderstands-Parabel des Kraftfahrzeugs unter den gegebenen Betriebsbedingungen erreicht ist.

### Stufengetriebe — verbrauchsoptimale Regelung

Bei Stufengetrieben ist eine verbrauchsoptimale Regelung in der oben beschriebenen Weise nicht möglich, da sich innerhalb eines Ganges die Getriebeübersetzung i nicht ändert und damit keine Regelung der Brennkraftmaschine 15 über die sich aufgrund der Änderung der Getriebeübersetzung einstellende Motordrehzahl $n_M$ möglich ist. Es ist daher bei verbrauchsoptimaler Regelung eines Stufengetriebes erforderlich, dem Motorkennlinienspeicher 13 den Leistungs-Sollwert $P_{soll}$ zuzuführen und die verbrauchsoptimale Drosselklappenstellung $\alpha$ aus der Linie optimalen Kraftstoffverbrauchs 51 entsprechend Fig. 11 zu ermitteln. Dies bedeutet, daß innerhalb eines Bereiches 42, 43, 44 entsprechend Fig. 5 in der Weise verbrauchsoptimal geregelt werden kann, daß die Drosselklappeneinstellung $\alpha$ in Abhängigkeit vom Leistungs-Sollwert $P_{soll}$ über den Motorkennlinienspeicher 13 und nicht mehr in Abhängigkeit von der Motordrehzahl $n_M$ eingestellt wird. Diese Art der Regelung ist jedoch naturgemäß nur begrenzt einsetzbar, da bei jedem Gangwechsel die Linie optimalen Kraftstoffverbrauchs 51 verlassen wird. Es ist daher erforderlich, die verbrauchsoptimale Regelung mit der leistungsoptimalen Regelung in der weiter unten beschriebenen Weise alternativ zu verbinden.

### Stufengetriebe — leistungsoptimale Regelung

Die Schaltgeraden 410, 410'; 411, 411' des Getriebekennfeldes 41 entsprechend Fig. 5 sind so gelegt, daß im jeweiligen Gang die Rückschaltgerade im Bereich der Vollastanreicherung der Brennkraftmaschine liegt, wie dies mit 80 in Fig. 14a bezeichnet ist, und daß die jeweilige Hochschaltgerade etwas, beispielsweise 15%, unterhalb der Linie optimalen Kraftstoffverbrauchs 51 der jeweiligen Brennkraftmaschine liegt, wie dies in Fig. 14a mit 81 bezeichnet ist. Dann ist gewährleistet, daß der Betrieb der Brennkraftmaschine 15 auf einen engen Bereich um die Linie optimalen Kraftstoffverbrauchs 51 herum beschränkt ist und sich dadurch eine besonders wirtschaftliche Betriebsweise ergibt. In Fig. 14b sind zur Veranschaulichung des Betriebes bei leistungsoptimaler Regelung mit einem Stufengetriebe Übersetzungskennlinien 82, 83 für den ersten bzw. den zweiten Gang eingezeichnet. Diese Übersetzungskennlinien 82, 83 dienen dazu, den jeweils eingenommenen Arbeitspunkt im Motorkennfeld 50 nach Fig. 14a gangabhängig, d. h., entsprechend der jeweiligen Getriebeübersetzung des Gangs zu scheren.

Die Brennkraftmaschine 15 befindet sich in einem Arbeitspunkt 84, entsprechend einer Leistung $P_1$ bei eingelegtem zweiten Gang. Wird nun vom Fahrpedal 10 ein neuer Leistungs-Sollwert $P_2$ vogegeben, so kann dieser im zweiten Gang nicht direkt angesteuert werden, da sich der zugehörige, fiktive neue Arbeitspunkt 85 oberhalb der Rückschaltgeraden 80 befindet. Die Drosselklappe wird in der oben beschriebenen Weise geöffnet und im Arbeitspunkt 86, in dem die Rückschaltgerade 80 erreicht wird, wird in den ersten Gang rückgeschaltet. Statt des Arbeitspunktes 85 ergibt sich nun im ersten Gang, wie man durch Scherung an den Übersetzungskennlinien 82, 83 erhält, ein Arbeitspunkt 87. Reicht nun die Leistung $P_2$ zum Beschleunigen des Fahrzeugs aus, erhöht sich die Motordrehzahl $n_M$, bis der Arbeitspunkt 88 und damit die Hochschaltgerade 81 erreicht wird. Es wird nun wieder in den zweiten Gang hochgeschaltet, und es ergibt sich wiederum über die Übersetzungskennlinien 82, 83 ein Arbeitspunkt 89. Wie man aus der in Fig. 14 dargestellten Betriebsweise eines Stufengetriebes im leistungsoptimalen Betrieb erkennt, bewegen sich die Arbeitspunkte zwar nicht auf der Linie optimalen Kraftstoffverbrauchs 51, jedoch in einem nahen Bereich um diese Linie herum, so daß dennoch ein günstiger Kraftstoffverbrauch erzielt werden kann.

### Umschaltung von verbrauchsoptimaler auf leistungsoptimale Regelung

Die verbrauchsoptimale Regelung ist nicht in allen Betriebsfällen ausreichend, dann beispielsweise, wenn der Fahrer die gewünschte Motorleistung schnell zur Verfügung haben will. Abgesehen davon, ergeben sich für eine verbrauchsoptimale Regelung die oben ausgeführten Begrenzungen für ein Stufengetriebe. In einer besonders bevorzugten Ausführungsform der Erfindung sind daher Schaltmittel vorgesehen, die eine Umschaltung von verbrauchsoptimaler auf leistungsoptimale Regelung bewirken.

Hierzu ist, wie aus Fig. 15 ersichtlich, ein Umschalter 90 vorgesehen, mit dessen Hilfe der Steuereingang der Brennkraftmaschine 15, d. h. der Betriebsgemischerzeuger 16, vom Ausgang eines ersten Motorkennlinienspeichers 13' auf den eines zweiten Motorkennlinienspeichers 13'' umschaltbar ist. Der erste Motorkennlinienspeicher 13' enthält dabei ein Motorkennfeld 50 bzw. 52 entsprechend Fig. 6, 7 für leistungsoptimale Regelung, und der zweite Motorkennlinienspeicher 13'' enthält die Linie optimalen Kraftstoffverbrauchs 51 für verbrauchsoptimale Regelung. Der Umschalter 90 wird von einer Programmschalteinheit 91 in Abhängigkeit von der Motordrehzahl $n_M$, dem Leistungs-Sollwert $P_{soll}$ sowie alternativ von der Fahrpedal-Auslenkung $\beta$ oder der Drosselklappenstellung $\alpha$ betätigt. Als Kriterium für eine Umschaltung von verbrauchsoptimaler auf leistungsoptimale Regelung bietet sich zunächst die Geschwindigkeit der Fahrpedalauslenkung $\beta$ an. Dies bewirkt, daß bei ruckweiser Betätigung des Fahrpedals die erfindungsgemäße Vorrichtung auf leistungsoptimale Regelung umschaltet. In einer zweiten Ausführungsform der Programmschalteinheit 91 wird auf leistungsoptimale Regelung dann umgeschaltet, wenn die gewünschte Leistungsdifferenz $\Delta P$ einen vogegebenen Betrag überschreitet. Schließlich wird bei einer dritten Ausführungsform der Programmeinheit 91 dann auf leistungsoptimale Regelung umgeschaltet, wenn der gewünschte Leistungs-Sollwert $P_{soll}$ nach einer vorgegebenen Zeit $\Delta t$ nicht erreicht wird. Hierdurch ist sichergestellt, daß die bei herkömmlichen Fahrzeugen üblichen Verhaltensweisen von Kraftfahrern zur Erzielung einer hohen Leistung, nämlich durchtreten des Fahrpedals bei der erfindungsgemäßen Vorrichtung zur Umschaltung auf eine leistungsoptimale Regelung herangezogen werden, wodurch die gewünschte Leistung im Bedarfsfall dann auch unter Inkaufnahme einer Erhöhung des Kraftstoffverbrauchs zur Verfügung steht.

Die Rückschaltung von leistungsoptimaler Regelung auf verbrauchsoptimale Regelung erfolgt erfindungsgemäß dann, wenn die Motordrehzahl $n_M$ den Betrag der dem Leistungs-Sollwert $P_{soll}$ entsprechenden Motordrehzahl $n_{Msoll}$ bei verbrauchsoptimalem Betrieb erreicht hat. Dies bewirkt, daß der Arbeitspunkt im Motorkennfeld 50 entsprechend Fig. 12 bei leistungsoptimalem Betrieb, der entlang der Kennlinie 501 geführt wurde und bei Erreichen der Leistung $P_2$ sich parallel zur Motordrehzahl-Achse bewegt, sich nicht mehr bis zum Erreichen der Fahrwiderstands-Parabel bewegt, sondern im Arbeitspunkt 76, der auf der Linie optimalen Kraftstoffverbrauchs 51 liegt, stehen bleibt. Damit ist wiederum ein Punkt der verbrauchsoptimalen Regelung erreicht, die im weiteren für den Antrieb des Kraftfahrzeugs gilt.

Zur Ermittlung der Motordrehzahl $n_{Msoll}$ ist, wie aus den Fig. 16 bis 18 ersichtlich, ein dritter Motorkennlinienspeicher 92 vorgesehen, dem der Leistungs-Sollwert $P_{soll}$ zugeführt wird. Dieser dritte Motorkennlinienspeicher 92 entspricht in seinem Aufbau dem bisher beschriebenen Motorkennlinienspeicher, so daß sich eine gesonderte Beschreibung erübrigt. Sein Ausgangssignal wird dem negativen Eingang eines Komparators 93 zugeführt, auf dessen positiven Eingang ein der Motordrehzahl $n_M$ entsprechendes Signal gelegt ist. Dies bedeutet, daß der Ausgang des Komparators 93 dann auf logisch 1 schaltet, wenn die Motordrehzahl $n_M$ die Motordrehzahl $n_{Msoll}$ optimalen Verbrauchs erreicht hat.

In der ersten Ausführungsform der Programmschalteinheit 91 entsprechend Fig. 16 wird das der Fahrpedalauslenkung $\beta$ entsprechende Signal über einen Widerstand 97 und einen Kondensator 98 auf den Eingang eines Verstärkers 99 geführt, der mit der Parallelschaltung eines Widerstandes 100 und eines Kondensators 101 gegengekoppelt ist. Diese bekannte Differenzierschaltung bewirkt, daß am Ausgang des Verstärkers 99 ein Signal entsprechend der ersten zeitlichen Ableitung $\dot{\beta}$ der Fahrpedalauslenkung $\beta$ auftritt. Dieses Signal wird dem negativen Eingang eines Komparators 102 und dem positiven Eingang eines Komparators 103 zugeführt. Der positive Eingang des Komparators 102 und der negative Eingang des Komparators 103 sind an Anzapfungen eines aus Widerständen 104, 105, 106 bestehenden und zwischen eine Bezugsspannung und Masse geschalteten Spannungsteilers gelegt. Die Ausgänge der Komparatoren 102, 103 sind schließlich mit den Eingängen eines ODER-Gatters 107 verbunden. Am Ausgang des ODER-Gatters 107 liegt dann ein Signal logisch 1 an, wenn die erste zeitliche Ableitung $\dot{\beta}$ der Fahrpedalauslenkung $\beta$ einen bestimmten positiven Betrag überschritten oder einen bestimmten negativen Betrag unterschritten hat. Durch ein Signal logisch 1 am Ausgang des ODER-Gatters 107 wird ein aus NOR-Gattern 94, 95 bestehendes Flipflop 96 gesetzt. An dessen mit dem Steuereingang des Umschalters 90 verbundenen Ausgang erscheint dann ein Signal logisch 0 und der Umschalter 90 verbindet, wie in der Fig. 16 dargestellt, den Steuereingang der Brennkraftmaschine 15 mit dem der leistungsoptimalen Regelung zugeordneten Motorkennlinienspeicher 13'. Erscheint dann am Ausgang des Komparators 93 ein Signal logisch 1, wird das Flipflop 96 zurückgesetzt, am Ausgang erscheint ein Signal 1 und der Umschalter 90 schaltet den Steuereingang der Brennkraftmaschine 15 wieder auf den der verbrauchsoptimalen Regelung zugeordneten Kennlinienspeicher 13''.

Fig. 17 zeigt das Beispiel eines Schaltbildes der zweiten Ausführungsform der Programmschalteinheit 91. Bei dieser Ausführungsform wird der gewünschte Leistungs-Sollwert $P_{soll}$ mit der tatsächlichen Leistung P verglichen und dann auf leistungsoptimalen Betrieb geschaltet, wenn die Differenz der beiden Werte einen vorgegebenen Betrag überschreitet. Hierzu ist es zunächst erforderlich, die tatsächliche Motorleistung P zu ermitteln. Hierzu ist ein vierter Motorkennlinienspeicher 110 vorgesehen, dem die Drosselklappenstellung $\alpha$ und die Motordrehzahl $n_M$ zugeführt werden, und an dessen Ausgang, wie bereits mehrfach beschrieben, ein der tatsächlichen Motorleistung P entsprechender Wert erscheint. Die an einem Widerstand 111 abfallende und der Motorleistung P entsprechende Spannung wird dem invertierenden Eingang eines Operationsverstärkers 112 zugeführt, dessen nicht invertierender Eingang mit dem dem Leistungs-Sollwert $P_{soll}$ entsprechendem Signal beaufschlagt ist. Der Ausgang des Operationsverstärkers 112 führt ein der Differenz der beiden Leistungswerte entsprechendes Signal und leitet dieses dem positiven Eingang eines Komparators 113 zu, an dessen negativen Eingang vermittels eines Widerstandes 114 über eine Hilfsspannung ein festes Potential, entsprechend der vorgegebenen Leistungsdifferenzschwelle gelegt wurde. Der Ausgang des Komparators 113 schaltet dann auf logisch 1, wenn der gewünschte Leistungs-Sollwert $P_{soll}$ um mehr als das vorgegebene Maß von der tatsächlichen Motorleistung P abweicht. Das Flipflop 96 wird wiederum gesetzt und über den Umschalter 90 vom verbrauchsoptimalen auf leistungsoptimalen Betrieb umgeschaltet.

Fig. 18 zeigt das Beispiel eines Schaltplanes der dritten Ausführungsform der Programmschalteinheit 91. Bei dieser Ausführungsform soll bewirkt werden, daß dann auf leistungsoptimalen Betrieb umgeschaltet wird, wenn der gewünschte Leistungs-Sollwert $P_{soll}$ nach einer vorgegebenen Zeitspanne $\Delta t$ nicht erreicht wurde. Die Anwendung dieses Kriteriums ist jedoch nur oberhalb einer bestimmten Differenz zwischen Leistungs-Istwert und Leistungs-Sollwert sinnvoll. Es wird daher zunächst wie bei der zweiten Ausführungsform entsprechend Fig. 17 vermittels des Operationsverstärkers 112 und des Komparators 113 ein Kriterium dafür gebildet, ob die vorgegebene Leistungsdifferenz überschritten wurde. Ist dies der Fall, erscheint am Ausgang des Komparators 113 ein Signal logisch 1, das einerseits das aus einem UND-Gatter 115, einem Widerstand 116 und einem Kondensator 117 bestehende Zeitglied startet und andererseits ein aus NOR-Gattern 120, 121 bestehendes Flipflop setzt. Der Ausgang des UND-Gatters 115 und des aus den NOR-Gattern 120, 121 bestehenden Flipflops sind auf Eingänge eines NOR-Gatters 118 geführt. Ein dritter Eingang dieses NOR-Gatters 118 ist mit dem Ausgang eines Komparators 119 verbunden, dessen positiver Eingang mit dem Ausgang des Operationsverstärkers 112 verbunden ist und dessen negativer Eingang an Masse liegt. Der Ausgang des NOR-Gatters 118 ist an den Setzeingang des Flipflops 96 angeschlossen, der Ausgang des Komparators 93 dient zum Rücksetzen des aus den NOR-Gattern 120, 121 bestehenden Flipflops sowie des Flipflops 96.

Die Wirkungsweise der in Fig. 18 angegebenen Schaltung ist wie folgt: Bei verbrauchsoptimalem Betrieb sind die Flipflops 96; 120, 121 zurückgesetzt, und an ihren Ausgängen liegt das Signal logisch 1. Dies bewirkt, daß der Umschalter 90 auf verbrauchsoptimale Regelung schaltet und daß das NOR-Gatter 118 gesperrt ist. Übersteigt nun der gewünschte Leistungs-Sollwert $P_{soll}$ eine vorgegebene Leistungsdifferenz $\Delta P$ gegenüber der tatsächlichen Leistung $P$, schaltet der Ausgang des Komparators 113 auf logisch 1 und setzt damit das aus den NOR-Gattern 120, 121 bestehende Flipflop, so daß am dritten Eingang des NOR-Gatters 118 ein Signal logisch 0 anliegt. Gleichzeitig erscheint das Signal logisch 1 am ersten Eingang des UND-Gatters 115 und — für eine durch das RC-Glied 116, 117 vorgegebene Zeit — an dessen zweitem Eingang. Am Ausgang des UND-Gliedes 115 liegt mithin für die Zeitspanne $\Delta t$ das Signal logisch 1 an, das dem zweiten Eingang des NOR-Gatters 118 zugeführt wird. Das Signal am Ausgang des UND-Gatters 115 fällt jedoch nach der durch das RC-Glied 116, 117 bestimmten Zeitspanne $\Delta t$ wieder auf den Wert logisch 0. Zu diesem Zeitpunkt wird durch das NOR-Gatter 118 geprüft, ob die Differenz zwischen Leistungs-Sollwert $P_{soll}$ und tatsächlicher Leistung $P$ auf Null abgesunken ist. Ist dies nämlich nicht der Fall, erscheint am Ausgang des Komparators 119 ein Sigal logisch 0, so daß nunmehr alle drei Eingänge des NOR-Gatters 118 das Signal logisch 0 führen, wodurch an dessen Ausgang ein Signal logisch 1 erscheint, das das Flipflop 96 setzt, so daß der Umschalter 90 auf leistungsoptimalen Betrieb umschaltet.

### Anordnung mit verzögertem Leitungs-Sollwert

Wie aus den verschiedenen Motorkennfeldern ersichtlich, bedeutet jeder Gangwechsel ein Abweichen des Arbeitspunktes von der Linie optimalen Kraftstoffverbrauchs 51 der Brennkraftmaschine und damit eine Erhöhung des Kraftstoffverbrauchs. Es ist daher bei einer dritten Ausführungsform der erfindungsgemäßen Vorrichtung entsprechend Fig. 19 vorgesehen, zwischen die Fahrwiderstandskennlinienstufe 11 und den Eingang des Getriebekennlinienspeichers 12 ein Verzögerungsglied 122 einzuschalten. Damit wird dem Getriebekennlinienspeicher 12 als Teil des überlagerten Getrieberegelkreises der gewünschte Leistungs-Sollwert $P_{soll}$ verzögert zugeführt. Das Verzögerungsglied 122 kann in bekannter Weise aufgebaut sein, beispielsweise in Form eines T-Filters, dessen Schaltung in Fig. 20 dargestellt ist. Bei diesem Vierpol sind jeweils eine Eingangs- und Ausgangsklemme direkt und die andere über eine Reihenschaltung zweier Widerstände 123, 124 verbunden, deren Mittelanzapfung über einen Kondensator 125 an die Verbindungsleitung der beiden anderen Klemmen angeschlossen ist, wobei die Widerstände 123, 124 mit einem Widerstand 126 überbrückt sind. Die angegebene Schaltung wandelt den Leistungs-Sollwert $P_{soll}$ in einen verzögerten Leistungs-Sollwert $P_{soll}\cdot$ um. Hat beispielsweise der Eingangssignalverlauf 127 entsprechend dem Leistungs-Sollwert $P_{soll}$ die Form einer Sprungfunktion, die zum Zeitpunkt $t_1$ vom Wert 0 auf einen bestimmten Betrag springt, wie dies in Fig. 21a dargestellt ist, ergibt sich für den Ausgangssignalverlauf 128 entsprechend dem verzögerten Leistungs-Sollwert $P_{soll}\cdot$ der in Fig. 21b dargestellte Verlauf.

Fig. 22 zeigt die Auswirkung der Einschaltung des Verzögerungsgliedes 122. Befindet sich die Brennkraftmaschine 15 in einem Arbeitspunkt 130 entsprechend einer Leistung $P_1$ und wird vom Fahrpedal 10 ein neuer Leistungs-Sollwert $P_2$ vorgegeben, würde normalerweise die Rückschaltgerade 410 überschritten. Aufgrund des zwischengeschalteten Verzögerungsgliedes 122 wird der Leistungs-Sollwert jedoch nicht sprunghaft angehoben, wie dies vom Fahrpedal 10 vorgegeben wurde, sondern entlang einer Arbeitskennlinie 131. Diese ist jedoch so gekrümmt, daß die Rückschaltkennlinie 410 nicht überschritten wird. Es wird also die gewünschte Leistung $P_2$ erreicht, ohne daß in diesem Fall ein Gangwechsel nötig wäre.

### Anordnung mit Synchronisationseinrichtung

Eine vierte Ausführungsform der erfindungsgemäßen Vorrichtung ist in Fig. 23 dargestellt. Bei dieser Ausführungsform wird für den Fall eines Stufengetriebes für die notwendige Synchronisation zwischen den in Eingriff zu bringenden Getriebeteilen beim Gangwechsel gesorgt. Zu diesem Zweck erzeugt der Getriebekennlinienspeicher 12 ein Gangschaltsignal, das ein Flipflop 132 bei Beginn des Gangwechsels setzt und beim Ende des Gangwechsels zurücksetzt. Das Flipflop 132 wiederum steuert einen Umschalter 133, mit dessen Hilfe der Motordrehzahl-Eingang des Motorkennlinienspeichers 13 vom Motordrehzahl-Geber 17 auf eine Multiplizierstufe 134 umschaltbar ist. Die Multiplizierstufe 134 ist ihrerseits an den Ausgang des Getriebekennlinienspeichers 12 ud den Getriebeausgangsdrehzahl-Geber 18 angeschlossen. Durch Multiplikation der Getriebeausgangsdrehzahl $n_G$ mit dem Übersetzungsverhältnis des neuen Getriebeganges ist die Motordrehzahl $n_M$ bestimmt, bei der ein weiches Schließen der Getriebeteile, d. h. ein Synchronisieren, möglich ist. Diese »synchronisierte Motordrehzahl« wird nun über den Umschalter 133 dem Motorkennlinienspeicher 13 zugeführt, über den die Brennkraftmaschine 15 in der Weise geregelt wird, daß sich diese synchronisierte Motordrehzahl einstellt. Ist der Gangwechsel beendet, wird das Flipflop 132 vom Getriebekennlinienspeicher 12 zurückgesetzt und der Motorkennlinienspeicher 13 wird wieder an seinem Motordrehzahl-Eingang von der tatsächlichen Motordrehzahl $n_M$ beaufschlagt.

Anordnung mit Ruckbegrenzung

In einer fünften Ausführungsform der erfindungsgemäßen Vorrichtung, von der ein Beispiel in Fig. 24 dargestellt ist, ist zusätzlich eine Ruckbegrenzung vorgesehen. Bekanntlich tritt ein Fahrzeugruck vor allem beim Gangwechsel von Stufengetrieben auf, jedoch auch bei starkem Bremsen und Gasgeben. Der Fahrzeugruck kann in einem Regelsystem als erste zeitliche Ableitung der Fahrzeugbeschleunigung bzw. als zweite zeitliche Ableitung der Fahrzeuggeschwindigkeit erfaßt werden. Der Fahrzeugruck macht sich für die Insassen eines Kraftfahrzeugs unangenehm bemerkbar und mindert daher den Fahrkomfort.

Bei der in Fig. 24 dargestellten Vorrichtung ist der Getriebeausgangsdrehzahl-Geber 18 zusätzlich mit einer Begrenzungsstufe 140 verbunden, die zwischen die Fahrwiderstandskennlinienstufe 11 und den Getriebekennlinienspeicher 12 geschaltet ist. Die Begrenzungsstufe 140 wird dabei vom Fahrzeugruck gesteuert und wandelt den Leistungs-Sollwert $P_{soll}$ in einen modifizierten Leistungs-Sollwert $\overline{P_{soll}}$ um. Eine derartige Einstellung ist vor allem bei Fahrzeugen mit stufenlosem Getriebe von Vorteil, bei denen auf diese Weise die Verstellgeschwindigkeit des Getriebes in Abhängigkeit vom Fahrzeugruck begrenzt werden kann. Wird beispielsweise vom Fahrpedal ein solcher Leistungs-Sollwert $P_{soll}$ vorgegeben, daß sich durch die Beschleunigung ein unzulässig hoher Ruck ergäbe, wirkt über die Begrenzungsstufe 140 der Leistungs-Sollwert $\overline{P_{soll}}$ und damit die Verstellgeschwindigkeit des Getriebes auf einen Wert begrenzt, bei dem der Fahrzeugruck innerhalb der vorgegebenen Grenzen bleibt.

Eine Begrenzungsstufe 140 kann mit einer Schaltung, wie sie in Fig. 25 dargestellt ist, realisiert werden. Das Eingangssignal, entsprechend der Getriebeausgangsdrehzahl $n_G$ gelangt über einen Widerstand 142 und einen Kondensator 143 auf den Eingang eines Operationsverstärkers 141, der mit einem Widerstand 144 und einem Kondensator 145 gegengekoppelt ist. Der Ausgang des Operationsverstärkers 141 ist über einen Widerstand 147 und einen Kondensator 148 an den Eingang eines Operationsverstärkers 146 angeschlossen, der wiederum mit einem Widerstand 149 und einem Kondensator 150 gegengekoppelt ist. Die beschalteten Operationsverstärker 141, 146 stellen Differenzierstufen dar, entsprechend der Schaltung in Fig. 16. Am Ausgang des Operationsverstärkers 146 liegt mithin ein Signal an, daß der zweiten zeitlichen Ableitung $N_G$ der Getriebeausgangsdrehzahl $n_G$, d. h. dem Fahrzeugruck, entspricht. Dieses Signal gelangt über zwei gegensinnig parallel geschaltete Dioden 151, 152 und einen Widerstand 153 auf einen Summenpunkt, der den Eingang eines Operationsverstärkers 154 bildet. Dieser Operationsverstärker 154 ist mit einem Widerstand 155 gegengekoppelt. Außerdem wird dem Summenpunkt über einen Widerstand 156 ein dem Leistungs-Sollwert $P_{soll}$ entsprechendes Signal zugeführt. Die Schaltung nach Fig. 25 bewirkt, daß bei Überschreiten eines vorgebbaren, durch die Knickspannung der Dioden 151, 152 bestimmten Wertes der zweiten zeitlichen Ableitung $\ddot{n}_G$ der Getriebeausgangsdrehzahl $n_G$ der Eingang des Operationsverstärkers 154 auf seinem Potential festgehalten und damit die Verstärkung des Leistungs-Sollwertsignals $P_{soll}$ begrenzt wird. Durch die Parallelschaltung der gegensinnig gepolten Dioden 151, 152 wird dabei erreicht, daß die Begrenzung des Leistungs-Sollwertsignals sowohl bei Überschreiten eines negativen Grenzwertes des Fahrzeugrucks wie auch eines positiven Grenzwertes des Fahrzeugrucks eintritt.

**Patentansprüche**

1. Vorrichtung zur elektronischen Regelung einer Antriebsmotor-Getriebe-Einheit eines Kraftfahrzeugs mit einem einen Leistungs-Sollwert des Antriebsmotors vorgebenden Betätigungsorgan (10) und wenigstens einem, Leistungskennlinien des Antriebsmotors enthaltenden elektronischen Motorkennlinienspeicher (13), wobei in Abhängigkeit vom Leistungs-Sollwert über den wenigstens einen Kennlinienspeicher (13) der Antriebsmotor und das Getriebe (14) derart geregelt werden, daß sich ein optimaler Energieverbrauch des Antriebsmotors ergibt, dadurch gekennzeichnet, daß in einem elektronischen Getriebekennlinienspeicher (12) ein Getriebekennfeld: Getriebeübersetzung (i) in Abhängigkeit vom Leistungs-Sollwert ($P_{soll}$) und der Fahrgeschwindigkeit ($v_F \sim n_G$) [$i = f(P_{soll}, v_F)$] abgespeichert ist, daß in einem ersten Regelkreis die Getriebeübersetzung (i) mit Priorität gegenüber einem zweiten Regelkreis für die Motorleistung entsprechend dem Leistungs-Sollwert ($P_{soll}$) nach Maßgabe des Getriebekennfeldes eingestellt wird und daß in dem zweiten Regelkreis eine Steuergröße ($\alpha$) des Antriebsmotors in Abhängigkeit von der sich einstellenden Motordrehzahl ($n_M$) und dem Leistungs-Sollwert ($P_{soll}$) nach Maßgabe des in dem Motorkennlinienspeicher (13) enthaltenen Motorkennfeldes: Motorleistung (P) in Abhängigkeit von der Motordrehzahl ($n_M$) und der Drosselklappenstellung ($\alpha$) [$P = f(n_M, \alpha)$] so eingestellt wird, daß die Leistungsabgabe des Motors entlang einer im Motorkennfeld (50) festgelegten Regelkurve geändert wird.

2. Vorrichtung nach Anspruch 1, dadurch gekennzeichnet, daß der Antriebsmotor eine Brennkraftmaschine (15) ist, die von der Steuergröße (α) über einen Betriebsgemischerzeuger (16) steuerbar ist.

3. Vorrichtung nach Anspruch 2, dadurch gekennzeichnet, daß die Steuergröße (α) die Stellung einer Drosselklappe ist.

4. Vorrichtung nach Anspruch 2, dadurch gekennzeichnet, daß die Steuergröße die elektrischen Impulse für die Auslösung von Einspritzventilen eines Kraftstoffeinspritzsystems sind.

5. Vorrichtung nach einem der vorhergehenden Ansprüche, dadurch gekennzeichnet, daß der Leistungs-Sollwert ($P_{soll}$) von einem Fahrpedal (10) über eine Fahrwiderstandskennlinienstufe (11) mit im wesentlichen parabelartiger Kennlinie (20) erzeugt wird.

6. Vorrichtung nach einem der vorhergehenden Ansprüche, dadurch gekennzeichnet, daß der Getriebekennlinienspeicher (12) das Getriebekennfeld (40) : Getriebeübersetzung (i) in Abhängigkeit vom Leistungs-Sollwert ($P_{soll}$), der Getriebeausgangsdrehzahl ($n_G$) [$i=f(P_{soll}, n_G)$] eines stufenlosen Getriebes enthält und mit der Fahrwiderstandskennlinienstufe (11) und einem Getriebeausgangsdrehzahl-Geber (18) verbunden ist und daß das Ausgangssignal des Getriebekennlinienspeichers (12) das jeweilige Übersetzungsverhältnis (i) des als stufenloses Getriebe ausgebildeten Getriebes (14) bestimmt.

7. Vorrichtung nach einem der Ansprüche 1 bis 5, dadurch gekennzeichnet, daß der Getriebekennlinienspeicher (12) das Getriebekennfeld (41) : Getriebeübersetzung (i) in Abhängigkeit vom Leistungs-Sollwert ($P_{soll}$) und der Getriebeausgangsdrehzahl ($n_G$) [$i=f(P_{soll}, n_G)$] eines Stufengetriebes enthält und mit der Fahrwiderstandskennlinienstufe (11) und einem Getriebeausgangsdrehzahl-Geber (18) verbunden ist und daß das Ausgangssignal des Getriebekennlinienspeichers (12) den jeweils einzulegenden Gang (i) des als Stufengetriebe ausgebildeten Getriebes (14) bestimmt.

8. Vorrichtung nach einem der vorhergehenden Ansprüche, dadurch gekennzeichnet, daß ein erster Motorkennlinienspeicher (13') das Motorkennlinienfeld (50; 52) : Leistung (P) in Abhängigkeit von der Motordrehzahl ($n_M$) und der Drosselklappenstellung (α); Drosselklappenstellung (α) in Abhängigkeit von der Leistung (P) und der Motordrehzahl ($n_M$) ($P=f(n_M, α)$; $α=f(P, n_M)$) der Brennkraftmaschine (15) enthält und mit der Fahrwiderstandskennlinienstufe (11) und einem Motordrehzahl-Geber (17) verbunden ist und daß das Ausgangssignal des ersten Motorkennlinienspeichers (13') die Steuergröße (α) der Brennkraftmaschine (15) bestimmt.

9. Vorrichtung nach einem der vorhergehenden Ansprüche, dadurch gekennzeichnet, daß die Kennlinienspeicher (12, 13) Digitalspeicher (65) enthalten, daß die Kennfelder gerastert sind und die jeweiligen Werte der Rastersegmente (A84, A123, ...) in Speicherplätze des Digitalspeichers (65) mit entsprechenden Adressen eingeschrieben sind.

10. Vorrichtung nach Anspruch 9, dadurch gekennzeichnet, daß zur Abfrage eines Kennfeldwertes (i; α) die Eingangsgrößen ($P_{soll}$, $n_G$; $P_{soll}$, $n_M$) über Analog-Digital-Wandler (60, 62) Wichtungsstufen (61, 63) zugeführt werden, in denen den Werten der Eingangssignale Feldwerte (FP, $Fn_G$; FP, $Fn_M$) zugeordnet werden, die in Addierstufen (64) addiert werden, wobei die Ausgangssignale der Addierstufe (64) zur Adressierung der Digitalspeicher (65) dienen.

11. Vorrichtung nach Anspruch 10, dadurch gekennzeichnet, daß zur Abfrage des Getriebekennfeldes (41) des Stufengetriebes der Addierstufe (64) ein weiterer gangabhängiger Feldwert (Fi) über eine Wichtungsstufe (68) zugeführt wird.

12. Vorrichtung nach Anspruch 11, dadurch gekennzeichnet, daß das Getriebekennfeld (41) und die gangabhängigen Feldwerte (Fi) so gewählt sind, daß die sich ergebende Rückschaltgerade (410, 411) des jeweiligen Ganges im wesentlichen mit der Leistungskennlinie (501) des Motorkennfeldes (50) bei maximaler Drosselklappenstellung (α) und die sich ergebende Hochschaltgerade (410', 411') mit einer etwas, beispielsweise 15%, unterhalb der Linie optimalen Kraftstoffverbrauches (51) liegenden Leistungskennlinie (503) übereinstimmt.

13. Vorrichtung nach einem der vorhergehenden Ansprüche, dadurch gekennzeichnet, daß ein zweiter Motorkennlinienspeicher (13'') die Motorkennlinie : Drosselklappenstellung (α) in Abhängigkeit von der Motordrehzahl ($n_M$) ($α=(n_M)$) der Brennkraftmaschine (15) bei optimalem Kraftstoffverbrauch enthält, wobei der zweite Motorkennlinienspeicher (13'') an den Motordrehzahl-Geber (17) angeschlossen ist und daß das Ausgangssignal des zweiten Motorkennlinienspeichers (13'') die Steuergröße (α) der Brennkraftmaschine (15) bestimmt.

14. Vorrichtung nach Anspruch 13, dadurch gekennzeichnet, daß die Ausgangssignale der Motorkennlinienspeicher (13', 13'') auf einen Umschalter (90) geführt sind, der mit dem Steuereingang der Brennkraftmaschine (15) in Wirkungsverbindung steht und daß der Umschalter (90) von einer Programmschalteinheit (91) steuerbar ist.

15. Vorrichtung zur elektronischen Regelung einer Antriebsmotor-Getriebeeinheit eines Kraftfahrzeuges mit einem einen Leistungs-Sollwert des Antriebsmotors vorgebenden Betätigungsorgan (10) und wenigstens einem Leistungskennlinien des Antriebsmotors enthaltenden elektronischen Motorkennlinienspeicher (13), wobei in Abhängigkeit vom Leistungs-Sollwert über den wenigstens einen Kennlinienspeicher (13) der Antriebsmotor und das Getriebe (14) derart geregelt werden, daß sich ein optimaler Energieverbrauch des Antriebsmotors ergibt, dadurch gekennzeichnet, daß in einem elektronischen Getriebekennlinienspeicher (12) ein Getriebekennfeld : Getriebeübersetzung (i) in Abhängigkeit vom Leistungs-Sollwert ($P_{soll}$) und der Fahrgeschwindigkeit ($v_F \sim n_G$)($i=f(P_{soll}, V_F)$) ab-

gespeichert ist, daß in einem ersten Regelkreis die Getriebeübersetzung (i) mit Priorität gegenüber einem zweiten Regelkreis für die Motoreinstellung entsprechend dem Leistungs-Sollwert ($P_{soll}$) nach Maßgabe des Getriebekennfeldes eingestellt wird und daß in dem zweiten Regelkreis eine Steuergröße ($\alpha$) des Antriebsmotors in Abhängigkeit von der sich einstellenden Motordrehzahl ($n_M$) und dem Leistungs-Sollwert ($P_{soll}$) nach Maßgabe eines ersten Motorkennlinienspeichers (13'), in dem das Motorkennfeld : Drosselklappenstellung ($\alpha$) in Abhängigkeit von dem Leistungs-Sollwert ($P_{soll}$) und der Motordrehzahl ($n_M$) ($\alpha = f(P_{soll}, n_M)$) abgespeichert ist oder eines zweiten Motorkennlinienspeichers (13''), in dem die Motorkennlinie : Drosselklappenstellung ($\alpha$) in Abhängigkeit von dem Leistungs-Sollwert ($P_{soll}$) ($\alpha = f(P_{soll})$) bei optimalem Kraftstoffverbrauch der Brennkraftmaschine (15) abgespeichert ist, so eingestellt wird, daß die Leistungsabgabe des Motors wahlweise entlang jeweils einer der in den Motorkennfeldern festgelegten Regelkurven geändert wird, wobei die Ausgangssignale der Motorkennlinienspeicher (13', 13'') auf einen Umschalter (90) geführt sind, der mit dem Steuereingang der Brennkraftmaschine (15) in Wirkungsverbindung steht und daß der Umschalter (90) von einer Programmschalteinheit (91) steuerbar ist.

16. Vorrichtung nach Anspruch 14 oder 15, dadurch gekennzeichnet, daß die Programmschalteinheit (91) einen dritten Motorkennlinienspeicher (92) aufweist, der die Motorkennlinie : Motordrehzahl ($n_M$) in Abhängigkeit vom Leistungs-Sollwert ($P_{soll}$) ($n_M = f(P_{soll})$) für optimalen Kraftstoffverbrauch aufweist, der an die Fahrwiderstandskennlinienstufe (11) angeschlossen ist und daß der Umschalter (90) den Steuereingang der Brennkraftmaschine (15) vom Ausgang des ersten Motorkennlinienspeichers (13') auf den des zweiten Motorkennlinienspeichers (13'') umschaltet, wenn das Ausgangssignal des Motordrehzahl-Gebers (17) den Wert des Ausgangssignals des dritten Kennlinienspeichers (92) erreicht hat.

17. Vorrichtung nach einem der Ansprüche 14 bis 16, dadurch gekennzeichnet, daß die Programmschalteinheit (91) Schaltmittel zu Erfassung der Auslenkgeschwindigkeit ($\dot{\beta}$) des Fahrpedals (10) aufweist und daß der Umschalter (90) den Steuereingang der Brennkraftmaschine (15) vom Ausgang des zweiten Motorkennlinienspeichers (13'') auf den des ersten Motorkennlinienspeichers (13') umschaltet, wenn der Betrag der Auslenkgeschwindigkeit ($\dot{\beta}$) des Fahrpedals (10) einen vorgebbaren Wert überschreitet.

18. Vorrichtung nach einem der Ansprüche 14 bis 16, dadurch gekennzeichnet, daß die Programmschalteinheit (91) einen vierten Motorkennlinienspeicher (110) aufweist, der das Motorkennfeld (50) : Leistung (P in Abhängigkeit von der Drosselklappenstellung ($x$) und der Motordrehzahl ($n_M$) ($P = f(\alpha, n_M)$) enthält und mit dem Steuereingang der Brennkraftmaschine (15) sowie dem Motordrehzahl-Geber (17) verbunden ist und daß der Umschalter (90) den Steuereingang der Brennkraftmaschine (15) vom Ausgang des zweiten Motorkennlinienspeichers (13'') auf den des ersten Motorkennlinienspeichers (13') umschaltet, wenn die Differenz zwischen dem Ausgangssignal der Fahrwiderstandskennlinienstufe (11) und dem des vierten Motorkennlinienspeichers (110) einen vorgebbaren Wert überschreitet.

19. Vorrichtung nach einem der Ansprüche 14 bis 16, dadurch gekennzeichnet, daß die Programmschalteinheit einen vierten Motorkennlinienspeicher (110) aufweist, der das Motorkennfeld (50) : Leistung (P) in Abhängigkeit von der Drosselklappenstellung ($x$) und der Motordrehzahl ($n_M$)($P = f(x, n_M)$) enthält und mit dem Steuereingang der Brennkraftmaschine (15) sowie dem Motordrehzahl-Geber (17) verbunden ist und da- der Umschalter (90) den Steuereingang der Brennkraftmaschine (15) vom Ausgang des zweiten Motorkennlinienspeichers (13'') auf den des ersten Motorkennlinienspeichers (13') umschaltet, wenn die Differenz zwischen dem Ausgangssignal der Fahrwiderstandskennlinienstufe und dem des vierten Motorkennlinienspeichers (110) nach einem vorgebbaren Zeitintervall ($\Delta t$) nicht auf Null abgesunken ist.

20. Vorrichtung nach einem der vorhergehenden Ansprüche, dadurch gekennzeichnet, daß zwischen die Fahrwiderstandskennlinienstufe (11) und den Getriebekennlinienspeicher (12) ein Verzögerungsglied (122) geschaltet ist.

21. Vorrichtung nach einem der Ansprüche 7 bis 19, dadurch gekennzeichnet, daß eine Multiplizierstufe (134) vorgesehen ist, deren Eingänge an den Getriebeausgangsdrehzahl-Geber (18) sowie den Ausgang des Getriebekennlinienspeichers (12) angeschlossen sind und daß von dem Getriebekennlinienspeicher (12) ein Umschalter (135) steuerbar ist, von dem die Motordrehzahl-Eingänge des Motorkennlinienspeichers (13) auf den Ausgang der Multiplizierstufe (134) umschaltbar sind.

22. Vorrichtung nach einem der vorhergehenden Ansprüche, dadurch gekennzeichnet, daß zwischen die Fahrwiderstandskennlinienstufe (11) und den Getriebekennlinienspeicher (12) eine Begrenzungsstufe (140) geschaltet ist, die an den Getriebeausgangs-Geber (18) angeschlossen ist, daß die Begrenzungsstufe (140) Schaltmittel zur zweimaligen zeitlichen Ableitung des Getriebeausgangsdrehzahl-Signals aufweist und daß das Ausgangssignal der Begrenzungsstufe (140) begrenzt wird, wenn der Betrag der zweimaligen zeitlichen Ableitung des Getriebeausgangsdrehzahl-Signals einen vorgebbaren Wert überschreitet.

**Claims**

1. Apparatus for the electronic control of a driving engine-transmission unit for a motor vehicle, comprising an actuating member predetermining a power set value of the driving engine and at least one electronic engine characteristic curve store (13) including power characteristic curves of the engine, wherein the driving engine and the transmission (14) are controlled in accordance with the power set value through the at least one characteristic curve store (13) in such a manner that an optimal energy consumption by the driving engine is produced, characeterised in that, a transmission characteristic field : transmission ratio (i) in accordance with the power set value ($P_{soll}$) and the travelling speed ($v_F \sim n_G$) ($i = f(P_{soll}, v_F)$) is stored in an electronic transmission characteristic curve store (12), that the transmission ratio (i) is set for the engine power. in a first control circuit having priority with respect to a second control circuit, according to the power set value ($P_{soll}$) as determined by the transmission characteristic field and that a control value ($\alpha$) for the driving engine is so set in the second control circuit in accordance with the prevailing engine speed ($n_M$) and the power set value ($P_{soll}$) as determined by the engine characteristic field : engine power (P) in accordance with the engine speed ($n_M$) and the throttle valve setting ($\alpha$) ($P = f(n_M, \alpha)$) included in the engine characteristic curve store (13), that the power output from the engine is varied along a control curve established within the engine characteristic field (50).

2. Apparatus according to claim 1, characterised in that, the driving engine is a combustion engine which is controllable by the control value ($\alpha$) through an oerational mixture generator (16).

3. Apparatus according to claim 2, ctararterised in that, the control value ($\alpha$) is the setting of a throttle valve.

4. Apparatus according to claim 2, characterised in that, the electrical pulses for triggering injection valves of a fuel injection system are the control value.

5. Apparatus according to one of the preceding claims, characterised in that, the power set value ($P_{soll}$) is generated by an accelerator pedal (10) through a traction resistance characteristic curve stage (11) with a substantially parabolic characteristic curve (20).

6. Apparatus according to one of the preceding claims, characterised in that, the transmission characteristic curve store (12) includes the transmission characteristic field (40) : transmission ratio (i) in accordance with the power set value ($P_{soll}$), the transmission output speed ($n_G$) ($i = f(P_{soll}, n_G)$) of a stepless transmission and is associated with the traction resistance characteristic curve stage (11) and a sensor (18) and that the output signal from the transmission characteristic curve store (12) determines the respective transmission ratio (i) of the transmission (14) designed as a stepless transmission.

7. Apparatus according to one of claims 1 to 5, characterised in that, the transmission characteristic curve store (12) includes the transmission chracteristic field (41) : transmission ratio (i) in accordance with the load set value ($P_{soll}$) and the transmission output speed ($n_G$) ($i = f(P_{soll}, n_G)$) of a step by step transmission and is connected to the traction resistance characteristic curve stage (11) and a sensor (18) and that the output signal form the transmission characteristic curve store (12) determines the respective gear (i) to be selected of the transmission (14) designed as a step by step transmission.

8. Apparatus according to one of the preceding claims, characterised in htat, a first engine characteristic curve store (13') includes the engine characteristic field (50; 52) : power (P) in accordance with the engine speed ($n_M$) and the throttle valve setting ($\alpha$); throttle valve setting ($\alpha$) in accordance with the power (P) and the engine speed ($n_M$) ($P = f(n_M, \alpha)$; $\alpha = f(P, n_M)$) of the combustion engine (15) and ist connected to the traction resistance characteristic curve stage (11) and a sensor (17) and that the output signal from the first engine characteristic curve store (13') determines the control value ($\alpha$) of the combustion engine (15).

9. Apparatus according to one of the preceding claims, characterised in that, the characteristic curve stores (12, 13) include digital sores (15), that the characteristic fields are latticed and the respective values of the lattice segments (A84, A123, ...) are read into memory locations in the digital store (65) with corresponding addresses.

10. Apparatus according to claim 9, characterised in that, for the interrogation of a characteristic field value (i; $\alpha$) the input values ($P_{soll}$, $n_G$; $P_{soll}$, $n_M$) are supplied through analogue digital converters (60, 62) to weighting stages (61, 63) in which the values of the input signals are associated with field values (FP, $Fn_G$; FP, $Fn_M$) which are summed in summing stages (64) wherein the output signals from the summing stage (64) serve of addressing the digital store (65).

11. Apparatus according to claim 10, characterised in that, a further gear dependent field value (Fi) is supplied through a weighting stage (68) to the summing stage (64) for the interrogation of the transmission characteristic field (41) of the step by step transmission.

12. Apparatus according to claim 11, characterised in that, the transmission characteristic field (41) and the gear dependent field value (Fi) are so selected that the resulting straight line change down (410, 411) of the respective gear corresponds substantially to the power characteristic curve (501) of the engine characteristic field (50) at maximum throttle valve position ($\alpha$) and the resulting straight line changing up (410', 411') corresponds to a power characteristic curve (503) lying somewhat, for example 15%, below the line of optimal fuel consumption (51).

13. Apparatus according to one of the preceding claims, characterised in that, a second engine characteristic curve store (13") includes the engine characteristic curve : throttle valve

setting ($\alpha$) in accordance with the engine speed ($n_M$) ($\alpha = f(n_M)$) of the combustion engine (15) at optimal fuel consumption, wherein the second engine characteristic curve store (13") is connected to the engine speed sensor (17) and that the output signal from the second engine characteristic curve store (13") determines the control value ($\alpha$) of the combustion engine (15).

14. Apparatus according to claim 13, characterised in that, the output signals from the engine characteristic curve store (13', 13") are supplied to a changeover switch (90) which is in communication with the control input to the combustion engine (15) and that the changeover switch (90) ist controllable by a programmed gear changing unit (91).

15. Apparatus for the electronic control of a driving engine-transmission unit for a motor vehicle, comprising an actuating member predetermining a power set value of the driving engine and a least one electronic engine characteristic curve store (13) including power characteristic curves of the engine, wherein the driving engine and the transmission (14) are controlled in accordance with the power set value through the at least one characteristic curve store (13) in such a manner that an optimal energy consumption by the driving engine is produced, characterised in that, a transmission characteristic field : transmission ratio (i) in accordance with the power set value ($P_{soll}$) and the travelling speed ($v_F \sim n_G$) ($i = f(P_{soll}, v_F)$) is stored in an electronic transmission characteristic curve store (12), that the transmission ratio (i) is set for the engine power in a first control circuit having priority with respect to a second control circuit, according to the power set value ($P_{soll}$) as determined by the transmission characteristic field and that a control value ($\alpha$) for the driving engine is so set in the second control circuit in accordance with the prevailing engine speed ($n_M$) and the power set value ($P_{soll}$) as determined by a first engine characteristic curve store (13') in which is stored the engine characteristic field : throttle valve setting ($\alpha$) in accordance with the power set value ($P_{soll}$) and the engine speed ($n_M$) ($\alpha = f(P_{soll}, P_M)$) or a second engine characteristic curve store (13") in which is stored the engine characteristic curve : throttle valve setting ($\alpha$) in accordance with the power set value ($P_{soll}$) ($\alpha = f(P_{soll})$) for optimal fuel consumption of the combustion engine (15), that the power output from the engine is varied selectively along a respective one of the control curves established in the engine characteristic fields, wherein the output signals from the engine characteristic curve stores (13', 13") are supplied to a changeover switch (90) which is in operative communication with the control input to the combustion engine (15) and that the changeover switch (90) ist controllable by a programmed gear changing unit (91).

16. Apparatus according to claim 14 or 15, characterised in that, the programmed gear changing unit (91) has a third engine characteristic curve store (92) which includes the engine characteristic curve : engine speed ($n_M$) in accordance with the power set value ($P_{soll}$) ($n_M = f(P_{soll})$) for optimal fuel consumption, and which is connected to the traction resistance characteristic curve stage (11) and that the changeover switch (90) switches over the control input to the combustion engine (15) from the output from the first engine characteristic curve store (13') to that of the second engine characteristic curve store (13") when the output signal from the engine speed sensor (17) has reached the value of the output signal from the third characteristic curve store (92).

17. Apparatus according to one of claims 14 to 16, characterised in that, the programmed gear changing unit (91) has switching means for detecting the displacement velocity ($\dot{\beta}$) of the accelerator pedal (10) and that the changeover switch (90) changes over the control input to the combustion engine (15) from the output from the second engine characteristic curve store (13") to that from the first engine characteristic curve store (13') when the amount of the displacement velocity ($\dot{\beta}$) of the accelerator pedal (10) exceeds a predetermined value.

18. Apparatus according to one of claims 14 to 16, characterised in that, the programmed gear changing unit (91) has a fourth engine characteristic curve store (110) which includes the engine characteristic field (50) : power (P) in accordance with the throttle valve setting ($\alpha$) and the engine speed ($n_M$) ($P = f(\alpha, n_M)$) and is connected to the control input to the combustion engine (15) and to the engine speed sensor (17) and that the changeover switch (90) changes over the control input to the combustion engine (15) from the output from the second engine characteristic curve store (13") to that of the first engine characteristic curve store (13') when the difference between the output signal from the traction resistance characteristic curve stage (11) and that from the fourth engine characteristic curve store (110) exceeds a predetermined value.

19. Apparatus according to one of claims 14 to 16, characterised in that, the programmed gear changing unit has a fourth engine characteristic curve store (110) which includes the engine characteristic field (50) : power (P) in accordance with the throttle valve setting ($\alpha$) and the engine speed ($n_M$) ($P = f(\alpha, n_M)$) and is connected to the control input to the combustion engine (15) and to the engine speed sensor (17) and that the changeover switch (90) switches over the control input to the combustion engine (15) from the ouput from the second engine characteristic curve store (13") to that from the first engine characteristic curve store (13') when the difference between the output signal from the traction resistance characteristic curve stage and that from the fourth engine characteristic curve store (110) has not fallen to zero after a redetermined time interval ($\Delta t$).

20. Apparatus according to one of the preceding claims, characterised in that, a delay device (122) is connected between the traction resistance characteristic curve stage (11) and the transmission characteristic curve store (12).

21. Apparatus according to one of claims 7 to 19, characterised in that, a multiplication stage (134) is provided the inputs to which are connected to the transmission output speed sensor (18) and to the output from the transmission characteristic curve store (12) and that a changeover switch (133) is controllable by the the transmission characteristic curve store (12) and by which the engine speed inputs to the engine characteristic curve store (13) can be switched over to the output from the multiplication stage (134).

22. Apparatus according to one of the preceding claims, characterised in that, a limiting stage, which is connected to the transmission output sensor is connected between the traction resistance characteristic curve stage (11) and the transmission characteristic curve store (12), that the limiting stage (140) has switching means for deriving the transmission output speed signal twice in unit time and that the output signal from the limiting stage (140) is limited when the amount of the transmission output speed signal derived twice in unit time exceeds a predetermined value.

**Revendications**

1. Dispositif pour la régulation électronique d'un ensemble moteur d'entraînement-boîte de vitesses d'un véhicule automobile, avec un organe de manoeuvre donnant une valeur théorique de charge du moteur d'entraînement et au moins une mémoire électronique (13) de courbes caractéristiques du moteur, contenant des courbes caractéristiques de charge du moteur d'entraînement, dispositif dans lequel le moteur d'entraînement et la boîte de vitesses (14) sont réglés de façon telle en fonction de la valeur théorique de charge, par l'intermédiaire d'au moins une mémoire (13) de courbes caractéristiques, qu'il en résulte une consommation optimale d'énergie du moteur d'entraînement, dispositif caractérisé en ce que, dans une mémoire électronique (12) de courbes caractéristiques de la boîte de vitesses, est mis en mémoire un champ caractéristique de la boîte de vitesses ($i = f$ ($P_{soll}$, $V_F$) : rapport (i) de la boîte de vitesses en fonction de la valeur théorique de charge ($P_{soll}$) et de la vitesse de déplacement du véhicule ($V_F \sim n_G$); tandis que dans un premier circuit de réglage, le rapport (i) de la boîte de vitesses, par priorité vis à vis d'un second circuit de réglage pour la charge du moteur, est ajusté de façon correspondante à la valeur théorique de charge ($P_{soll}$) en tenant compte du champ caractéristique de la boîte de vitesses, et tandis que dans le second circuit de réglage, une grandeur de commande ($\alpha$) du moteur d'entraînement est ajustée de façon telle en fonction de la vitesse de rotation du moteur ($n_M$) s'établissant et de la valeur théorique de charge ($P_{soll}$), en tenant compte du champ caractéristique du moteur ($P = f$ ($n_M$, $\alpha$)) contenu dans la mémoire (13) de courbes caractéristique du moteur : charge (P) du moteur en fonction de la vitesse de rotation du moteur ($n_M$) et de la position du clapet d'étranglement ($\alpha$); que la puissance délivrée par le moteur est modifiée suivant une courbe de réglage déterminée dans le champ caractéristique (50) du moteur.

2. Dispositif selon la revendication 1, caractérisé en ce que le moteur d'entraînement est un moteur à combustion interne (15) susceptible d'être commandé à partir de la grandeur de commande ($\alpha$) par l'intermédiaire d'un générateur de mélange de fonctionnement (16).

3. Dispositif selon la revendication 2, caractérisé en ce que la grandeur de commande ($\alpha$) est la position d'un clapet d'étranglement.

4. Dispositif selon la revendication 2, caractérisé en ce que les grandeurs de commandes sont les impulsions électriques pour le déclenchement des soupapes d'injection d'un système d'injection de carburant.

5. Dispositif selon l'une des revendications précédentes, caractérisé en ce que la valeur théorique de charge ($P_{soll}$) est obtenue à partir d'une pédale d'accélérateur (10) par l'intermédiaire d'un étage (11) de courbes caractéristiques de la résistance à l'avancement, avec une courbe caractéristique (20) essentiellement en forme de parabole.

6. Dispositif selon l'une des revendications précédentes, caractérisé en ce que la mémoire (12) de courbes caractéristiques de la boîte de vitesses contient le champ caractéristique de la boîte de vitesses (40) d'une boîte à changement de vitesses continu, à savoir $i = f$ ($P_{soll}$, $n_G$) : rapport (i) de la boîte de vitesses en fonction de la valeur théorique de charge ($P_{soll}$) et de la vitesse de rotation ($n_G$) à la sortie de la boîte de vitesses; cette mémoire (12) étant reliée à l'étage (11) de courbes caractéristiques de résistance à l'avancement et à un indicateur (18) de la vitesse à la sortie de la boîte de vitesses, le signal de sortie de la mémoire (12) de courbes caractéristiques de la boîte de vitesses déterminant le rapport de transmission (i) du moment de la boîte de vitesses (14), constituée par une boîte à changement de vitesses continu.

7. Dispositif selon l'une des revendications 1 à 5, caractérisé en ce que la mémoire (12) de courbes caractéristiques de la boîte de vitesses, contient le champ caractéristique (41) d'une boîte à changement de vitesses échelonné, à savoir $i = f$ ($P_{soll}$, $n_G$) : rapport de boîte de vitesses (i) en fonction de la valeur théorique de charge ($P_{soll}$) et de la vitesse de rotation ($n_G$) à la sortie de la boîte de vitesses; cette mémoire étant reliée à l'étage (11) de courbes caractéristiques de résistance à l'avancement et à un indicateur (18) de la vitesse de rotation à la sortie de la boîte de vitesses, le signal de sortie de la mémoire (12) de courbes caractéristiques de la boîte de vitesses déterminant le rapport du moment (i) à mettre en place dans la boîte de vitesses (14) constituée par une boîte de vitesses à échelons.

8. Dispositif selon l'une des revendications précédentes, caractérisé en ce qu'une première mémoire (13') de courbes caractéristiques du moteur contient le champ de courbes caractéristiques (50; 52) du moteur à combustion interne (15), à savoir $P = f(n_M, \alpha)$; $\alpha = f(P, n_M)$ : charge (P) en fonction de la vitesse de rotation ($n_M$) du moteur et de la position ($\alpha$) du clapet d'étranglement; position ($\alpha$) du clapet d'étranglement en fonction de la charge (P) et de la vitesse de rotation du moteur ($n_M$); cette première mémoire (13') étant reliée à l'étage (11) de courbes caractéristiques de résistance à l'avancement et à un indicateur (17) de la vitesse de rotation du moteur, le signal de sortie de cette première mémoire (13') de courbes caractéristiques du moteur déterminant la grandeur de commande ($\alpha$) di moteur à combustion interne (15).

9. Dispositif selon l'une des revendications précédentes caractérisé en ce que les mémoires de courbes caractéristiques (12, 13) contiennent une mémoire numérique (65), tandis que les champs caractéristiques sont en forme de réseaux, les valeurs respectives des segments de réseau (A84, A123, . . .) étant inscrites avec les adresses correspondantes dans les emplacements de mémoire de la mémoire numérique (65).

10. Dispositif selon la revendication 9, caractérisé en ce que pour appeler une valeur de champ caractéristique (i; $\alpha$), les grandeurs d'entrée ($P_{soll}$, $n_G$; $P_{soll}$, $n_M$) sont appliquées par l'intermédiaire d'un convertisseur analogique-numérique (60, 62) à des étages de densification (61, 63), dans lesquels sont associées aux signaux d'entrée, des valeurs de champ (FP, $Fn_G$; FP, $Fn_M$) qui sont totalisées dans des étages de totalisation (64), les signaux de sortie de ces étages de totalisation (64) étant utilisés pour l'adressage de la mémoire numérique (65).

11. Dispositif selon la revendication 10, caractérisé en ce que pour questionner le champ caractéristique (41) de la boîte de vitesses à échelons, une aute valeur de champ (Fi), dépendant du rapport de vitesse, est appliquée à l'étage totalisateur (64) par l'intermédiaire d'un étage de densification (68).

12. Dispositif selon la revendication 11, caractérisé en ce que le champ caractéristique (41) de la boîte de vitesses et la valeur de champ (Fi) dépendant du rapport de la boîte de vitesses, sont choisis de façon telle que la droite de rétrogradation résultante (410, 411) du rapport de vitesse considéré, coïncide essentiellement avec la courbe caractéristique de charge (501) du champ caractéristique (50) du moteur pour la position maximale ($\alpha$) du clapet d'étranglement, tandis que la droite de progression résultante (410', 411') coïncide avec une courbe caractéristique de charge (503) se situant quelque peu, par exemple 15%, au-dessous de la courbe (51) de consommation optimale de carburant.

13. Dispositif selon l'une des revendications précédentes, caractérisé en ce qu'une seconde mémoire (13") de courbes caractéristiques du moteur contient la courbe caractéristique du moteur à combustion interne (15) pour une consommation optimale de carburant, à savoir $\alpha = f(n_M)$ : position ($\alpha$) du clapet d'étranglement en fonction de la vitesse de rotation ($n_M$) du moteur, cette seconde mémoire (13") de courbes caractéristiques du moteur étant raccordée à l'indicateur (17) de vitesse de rotation du moteur, et le signal de sortie de cette seconde mémoire (13") de courbes caractéristiques du moteur déterminant la grandeur de commande ($\alpha$) du moteur à combustion interne (15).

14. Dispositif selon la revendication 13, caractérisé en ce que les signaux de sortie de la mémoire (13', 13") de courbes caractéristiques du moteur, sont appliqués à un commutateur (90), qui est en liaison fonctionnelle avec l'entrée de commande du moteur à combustion interne (15), ce commutateur (90) étant susceptible d'être commandé à partir d'un ensemble de commutation de programme (91).

15. Dispositif pour la régulation électronique d'un ensemble moteur d'entraînement-boîte de vitesses d'un véhicule automobile, avec un organe de manoeuvre donnant une valeur théorique de charge du moteur d'entraînement et au moins une mémoire électronique (13) de courbes caractéristiques du moteur, contenant des courbes caractéristiques de charges du moteur d'entraînement, dispositif dans lequel le moteur d'entraînement et la boîte de vitesses (14) sont réglés de façon telle en fonction de la valeur théorique de charge par l'intermédiaire d'au moins une mémoire (13) de courbes caractéristiques, qu'il en résulte une consommation optimale d'énergie du moteur d'entraînement, dispositif caractérisé en ce que, dans une mémoire électronique (12) de courbes caractéristiques de la boîte de vitesses, est mis en mémoire un champ caractéristique de la boîte de vitesses ($i = f(P_{soll}, \dot{V}_F)$) : rapport (i) de la boîte de vitesses en fonction de la valeur théorique de charge ($P_{soll}$) et de la vitesse de déplacement du véhicule ($V_F \sim n_G$), tandis que dans un premier circuit de réglage, le rapport (i) de la boîte de vitesses, par priorité vis-à-vis d'un second circuit de réglage pour la charge du moteur, est ajusté de façon correspondante à la valeur théorique de charge ($P_{soll}$) en tenant compte du champ caractéristique de la boîte de vitesses, et tandis que dans le second circuit de réglage, une grandeur de commande ($\alpha$) du moteur d'entraînement est ajustée en fonction de la vitesse de rotation du moteur ($n_M$) s'établissant et de la valeur théorique de la charge ($P_{soll}$) en tenant compte d'une première mémoire (13') de courbes caractéristiques du moteur, dans laquelle est mis en mémoire le champ caractéristique du moteur, à savoir $= f(P_{soll}, P_M)$ : position ($\alpha$) du clapet d'étranglement en fonction de la valeur théorique de charge ($P_{soll}$) et de la vitesse de rotation ($n_M$) du moteur; ou bien en tenant compte d'une seconde mémoire (13″) de courbes caractéristiques du moteur, dans laquelle est mise en mémoire la courbe caractéristique du moteur : à savoir $\alpha = (P_{soll})$ : position du clapet d'étranglement en fonction de la valeur théorique de la charge ($P_{soll}$); pour une consommation optimale de carburant du moteur à combustion interne (15), de façon telle que la puissance délivrée par le moteur est modifiée au choix le long respectivement d'une des courbes de réglage placée dans le champ caractéristique du moteur, les signaux de sortie de la mémoire de courbes caractéristique du moteur (13′, 13″) étant appliqués à un commutateur (90) qui est en liaison fonctionnelle avec l'entrée de commande du moteur à combustion interne (15), ce commutateur (90) étant susceptible d'être commandé à partir d'un ensemble de commutation de programme (91).

16. Dispositif selon la revendication 14 ou 15, caractérisé en ce que l'ensemble de commutation de programme (91) comporte une troisième mémoire (92) de courbes caractéristiques du moteur, comportant la courbe caractéristique du moteur pour une consommation optimale de carburant, à savoir $n_M = f(P_{soll})$ : vitesse de rotation ($n_M$) du moteur en fonction de la valeur théorique de la charge ($P_{soll}$); cette troisième mémoire (92) étant raccordée à l'étage (11) des courbes caractéristiques de résistance à l'avancement, le commutateur (90) commutant l'entrée de commande du moteur à combustion interne (15) de la sortie de la première mémoire (13′) de courbes caractéristiques du moteur sur la sortie de la seconde mémoire (13″) de courbes caractéristiques du moteur, lorsque le signal de sortie de l'indicateur (17) de vitesse de rotation du moteur à atteint la valeur du signal de sortie de la troisième mémoire (92) de courbes caractéristiques du moteur.

17. Dispositif selon l'une des revendications 14 à 16, caractérisé en ce que l'ensemble de commutation de programme (91) comporte des moyens de commutation pour détecter la vitesse de déviation ($\beta$) de la pédale d'accélérateur (10), le commutateur (90) commutant l'entrée de commande du moteur à combustion interne (15) de la sortie de la seconde mémoire (13″) de courbes caractéristiques du moteur sur la sortie de la première mémoire (13′) de courbes caractéristiques du moteur, lorsque la valeur de la vitesse de déviation ($\beta$) de la pédale d'accélérateur (10) dépasse une valeur prédéterminée.

18. Dispositif selon l'une des revendications 14 à 16, caractérisé en ce que l'ensemble de commutation de programme (91) comporte une quatrième mémoire (110) de courbes caractéristiques du moteur, qui contient le champ caractéristique (50) du moteur, à savoir $P = f(\alpha, n_M)$ : charge (P) en fonction de la position ($\alpha$) du clapet d'étranglement et de la vitesse de rotation ($n_M$) du moteur; cette mémoire étant reliée à l'entrée de commande du moteur à combustion interne (15) ainsi qu'à l'indicateur (17) de vitesse de rotation du moteur, le commutateur (90) commutant l'entrée de commande du moteur à combustion interne (15) de la sortie de la seconde mémoire (13″) de courbes caractéristiques du moteur sur la sortie de la première mémoire (13′) de courbes caractéristiques du moteur lorsque la différence entre le signal de sortie de l'étage (11) de courbes caractéristiques de résistance de l'avancement et le signal de sortie de la quatrième mémoire (110) de courbes caractéristiques du moteur, dépasse une valeur prédéterminée.

19. Dispositif selon l'une des revendications 14 à 16, caractérisé en ce que l'ensemble de commutation de programme comporte une quatrième mémoire (110) de courbes caractéristiques du moteur, qui contient le champ caractéristique (50) du moteur, à savoir $P = f(\alpha, n_M)$ : charge (P) en fonction de la position ($\alpha$) du clapet d'étranglement et de la vitesse de rotation ($n_M$); cette quatrième mémoire (110) étant reliée à l'entrée de commande du moteur à combustion interne (15) ainsi qu'à l'indicateur (17) de vitesse de rotation du moteur, le commutateur (90) commutant l'entrée de commande du moteur à combustion interne (15) de la sortie de la seconde mémoire (13″) de courbes caractéristiques du moteur sur la sortie de la première mémoire (13′) de courbes caractéristiques du moteur lorsque la différence entre le signal de sortie de l'étage de courbes caractéristiques de résistance à l'avancement et le signal de la quatrième mémoire (110) de courbes caractéristiques du moteur ne s'est pas abaissée à zéro après un intervalle de temps prédéterminé ($\Delta t$).

20. Dispositif selon l'une des revendications précédentes, caractérisé en ce que, entre l'étage (11) de courbes caractéristiques de résistance à l'avancement et la mémoire (12) de courbes caractéristiques de la boîte de vitesses, est branché un organe de temporisation (122).

21. Dispositif selon l'une des revendications 7 à 19, caractérisé en ce qu'il est prévu un étage multiplicateur (134), dont les entrées sont raccordées, d'une part, à l'indicateur (18) de la vitesse à la sortie de la boîte de vitesses, et d'autre part, à la sortie de la mémoire (12) de courbes caractéristiques de la boîte de vitesses, un commutateur (133) étant susceptible d'être commandé à partir de la mémoire (12) de courbes caractéristiques de la boîte de vitesses, commutateur par lequel les entrées des vitesses de rotation du moteur de la mémoire (13) de courbes caractéristiques du moteur, sont susceptibles d'être commutées sur la sortie de l'étage multiplicateur (134).

22. Dispositif selon l'une des revendications précédentes, caractérisé en ce que, entre l'étage (11) de courbes caractéristiques de résistance à l'avancement et la mémoire (12) de courbes caractéristiques de la boîte de vitesses, est branché un étage de limitation (140), qui est raccordé à l'indicateur (18) de la vitesse à la sortie de la boîte de vitesses, cet étage de limitation (140) comportant des moyens de

37  0 015 907

commutation pour dériver deux fois dans le temps le signal de la vitesse de rotation à la sortie de la boîte de vitesses, le signal de sortie de cet étage de limitation (140) étant limité lorsque la valeur de cette dérivation repétée deux fois dans le temps du signal de la vitesse à la sortie de la boîte de vitesses dépasse une valeur prédéterminée.

# Fig. 1

10

β

11

13

$P_{SOLL}$

12

$\alpha = f(P_{SOLL} \cdot n_M)$

$i = f(P_{SOLL} \cdot n_G)$

$\alpha$

$n_M$

$i$

$n_G$

16

15

17

14

18

19

# Fig. 2

P

20

$n_G$

21

# Fig. 3

# Fig.4

# Fig.5

# Fig. 6

# Fig. 7

# Fig.8

# Fig.9

## Fig.10

## Fig.11

# Fig. 12

# Fig. 13

# Fig. 14

# Fig. 15

$P_{Soll}$

$13'$

$\alpha = f(P_{Soll}, n_M)$

$\alpha = f(n_M)$

$\alpha = f(P_{Soll})$

$13''$

91

90

$\alpha$

$n_M$

16

15

17

14

i

# Fig. 16

# Fig. 17

Fig. 18

# Fig. 19

## Fig. 20

$P_{Soll}$

123  124

125

$P^*_{Soll}$

126

## Fig. 21

a)

$P_{Soll}$

127

$t_1$    $t$

b)

$P_{Soll}^*$

128

$t_1$    $t$

## Fig. 22

$P$

410

131

$P_2$

130

411'

$P_1$

$n_M$

# Fig. 23

# Fig. 24

# Fig. 25